(19) 

Europäisches
Patentamt
European
Patent Office
Office européen
des brevets

(11) **EP 4 514 010 A2**

(12) **EUROPEAN PATENT APPLICATION**
published in accordance with Art. 153(4) EPC

(43) Date of publication:
**26.02.2025 Bulletin 2025/09**

(21) Application number: **23802699.1**

(22) Date of filing: **28.04.2023**

(51) International Patent Classification (IPC):
**H04W 72/04** (2023.01)

(52) Cooperative Patent Classification (CPC):
**H04W 16/10; H04W 72/04; H04W 72/1263;**
**H04W 72/53**

(86) International application number:
**PCT/CN2023/091650**

(87) International publication number:
**WO 2023/216927 (16.11.2023 Gazette 2023/46)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **13.05.2022 CN 202210521171**

(71) Applicant: **Huawei Technologies Co., Ltd.**
**Shenzhen, Guangdong 518129 (CN)**

(72) Inventors:
 • **WANG, Ting**
  **Shenzhen, Guangdong 518129 (CN)**

 • **LYU, Yongxia**
  **Shenzhen, Guangdong 518129 (CN)**
 • **WEI, Dongdong**
  **Shenzhen, Guangdong 518129 (CN)**
 • **MA, Jianglei**
  **Shenzhen, Guangdong 518129 (CN)**
 • **ZHU, Peiying**
  **Shenzhen, Guangdong 518129 (CN)**

(74) Representative: **Maiwald GmbH**
**Engineering**
**Elisenhof**
**Elisenstrasse 3**
**80335 München (DE)**

(54) **RESOURCE DETERMINATION METHOD AND COMMUNICATION APPARATUS**

(57) This application provides a resource determining method and a communication apparatus. The method includes: A first communication apparatus receives first information, where the first information is used to schedule communication of Q communication groups, one communication group includes a sending communication apparatus and a receiving communication apparatus, the first information includes N pieces of communication group indication information and first resource allocation information, N is less than or equal to Q, the N pieces of communication group indication information indicate N scheduled communication groups, the first resource allocation information indicates a first resource, and the first resource is used to determine communication resources of the N communication groups. The first communication apparatus determines a communication resource of a first communication group based on the first resource, where the first communication group includes the first communication apparatus, and the N pieces of communication group indication information include first communication group indication information indicating the first communication group. The first communication apparatus performs communication on the communication resource of the first communication group. This can reduce information overheads and improve resource utilization.

FIG. 5

## Description

This application claims priority to Chinese Patent Application No. 202210521171.3, filed with the China National Intellectual Property Administration on May 13, 2022 and entitled "RESOURCE DETERMINING METHOD AND COMMUNICATION APPARATUS", which is incorporated herein by reference in its entirety.

## TECHNICAL FIELD

This application relates to the communication field, and more specifically, to a resource determining method and a communication apparatus.

## BACKGROUND

In a mobile communication system, when a terminal communicates with a network device, the network device may schedule, by using one piece of control information, one terminal to communicate with the network device. During sidelink communication, the network device may allocate a transmission resource to the communication terminal. A base station sends control information to a transmit end terminal, and the transmit end terminal sends sidelink data on an allocated transmission resource based on the control information.

However, in a scenario in which there are a large quantity of communication terminals, in the foregoing scheduling manner, large control resource overheads are needed, and resource utilization is low.

## SUMMARY

Embodiments of this application provide a resource determining method and a communication apparatus, to reduce information overheads and improve resource utilization.

According to a first aspect, a resource determining method is provided. The method includes: A first communication apparatus receives first information, where the first information is used to schedule communication of Q communication groups, Q is an integer greater than 1, one communication group includes a sending communication apparatus and a receiving communication apparatus, the first information includes N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups. The first communication apparatus determines a communication resource of a first communication group based on the first resource, where the first communication group includes the first communication apparatus, and the N pieces of communication group indication information include first communication group indication information indicating the first communication group. The first communication apparatus performs communication on the communication resource of the first communication group.

According to the foregoing solution, a second communication apparatus may schedule, by using the first information, a plurality of communication groups to separately perform intra-group communication. In comparison with scheduling one communication group by using one piece of control information, a scheduling latency can be reduced. In addition, the N communication groups share one piece of resource allocation information in the first information, that is, the first resource allocation information, and may determine, based on the first resource indicated by the first resource allocation information, a communication resource of a communication group to which each of the N communication groups belongs. In comparison with that the second communication apparatus indicates a communication resource of each communication group in the first information, information overheads can be reduced, and resource utilization can be improved.

With reference to the first aspect, in some implementations of the first aspect, the first resource includes the communication resources of the N communication groups.

According to the foregoing solution, the second communication apparatus may indicate, by using the first resource allocation information, that the first resource may specifically include the communication resources of the N communication groups. In this way, the second communication apparatus and communication apparatuses in the N communication groups reach a consensus on the first resource. When the information overheads are reduced, and the resource utilization is improved, the communication apparatuses in the N communication groups may determine, from the first resource, a communication resource of a communication group to which each of the communication apparatuses belongs, so that a communication apparatus in each communication group can communicate with a communication apparatus in the communication group on a communication resource of each communication apparatus.

With reference to the first aspect, in some implementations of the first aspect, the first resource is a communication resource of a second target communication group in the N communication groups.

By way of example and not limitation, the second target communication group is a communication group indicated by the 1st or last piece of communication group indication information in the N pieces of communication group indication information.

According to the foregoing solution, the second communication apparatus may indicate, by using the first resource allocation information, that the first resource is specifically the communication resource of the second target communication group in the N communication groups. In this way, the second communication apparatus and communication apparatuses in the N communication groups reach a consensus on the first resource. When the information overheads are reduced, and the resource utilization is improved, the communication apparatuses in the N communication groups may determine, based on the first resource, a communication resource of a communication group to which each of the communication apparatuses belongs, so that a communication apparatus in each communication group can communicate with a communication apparatus in the communication group on a communication resource of each communication apparatus.

With reference to the first aspect, in some implementations of the first aspect, there is an association relationship between the first communication group indication information and the communication resource of the first communication group.

According to the foregoing solution, there is the association relationship between the first communication group indication information and the communication resource of the first communication group. In this way, a communication apparatus in the first communication group can determine the communication resource of the first communication group based on the first communication group indication information and the association relationship, so that the communication apparatus in the first communication group can communicate with a communication apparatus in the first communication group on the communication resource of the first communication group.

With reference to the first aspect, in some implementations of the first aspect, that the first communication apparatus determines a communication resource of a first communication group based on the first resource includes: The first communication apparatus determines the communication resource of the first communication group based on the first resource and a ranking of the first communication group indication information in the N pieces of communication group indication information.

By way of example and not limitation, the communication resources of the N communication groups are sequentially arranged based on an arrangement order of the N pieces of communication group indication information in the first information.

According to the foregoing solution, specifically, the ranking of the first communication group indication information in the N pieces of communication group indication information may be associated with the communication resource of the first communication group. In this way, the first communication apparatus may determine the communication resource of the first communication group based on the ranking of the first communication group indication information in the N pieces of communication group indication information and the first resource, so that the communication apparatus in the first communication group can communicate with a communication apparatus in the first communication group on the communication resource of the first communication group.

With reference to the first aspect, in some implementations of the first aspect, sizes of the communication resources of the N communication groups in the first resource are the same; or sizes of communication resources of communication groups other than a first target communication group in the N communication groups are the same, and a size of a communication resource of the first target communication group is different from that of a communication resource of one communication group other than the first target communication group.

By way of example and not limitation, the first target communication group is a communication group indicated by the 1st or last piece of communication group indication information in the N pieces of communication group indication information.

According to the foregoing solution, the sizes of the communication resources of the N communication groups may be the same. In this way, the first communication apparatus may determine the communication resource of the first communication group based on the same size of the communication resources of the N communication groups, the association relationship between the first communication group indication information and the communication resource of the first communication group, and the first resource, so that the communication apparatus in the first communication group can communicate with a communication apparatus in the first communication group on the communication resource of the first communication group. In addition, if the first resource cannot be equally divided by N, it may be stipulated that the size of the communication resource of the first target communication group is different from that of a communication resource of another communication group, so that communication groups can reach a consensus, and accurately determine respective communication resources when the first resource cannot be equally divided by N.

With reference to the first aspect, in some implementations of the first aspect, that the first communication apparatus determines a communication resource of a first communication group based on the first resource includes: The first communication apparatus determines the communication resource of the first communication group in a resource other than a first non-candidate resource based on the first resource, where the first non-candidate resource is a resource that is not used for communication of the N communication groups.

According to the foregoing solution, it may be stipulated that when allocating communication resources to the N communication groups, the second communication apparatus determines the communication resources of the N communication groups after excluding a common unavailable resource (that is, the first non-candidate resource) of the N communication groups. Correspondingly, the N communication groups determine the communication resources of the communication groups in a resource other than the first non-candidate resource based on the first resource. In this way, the second communication apparatus and the communication apparatuses in the N communication groups reach a consensus on a resource determining manner, and the N communication groups can accurately determine respective communication resources.

Optionally, the first non-candidate resource may be configured by using common signaling (or information), for example, cell common signaling or group common signaling.

With reference to the first aspect, in some implementations of the first aspect, the communication resource of the first communication group includes a second non-candidate resource, the second non-candidate resource is not used for communication of the first communication group, and that the first communication apparatus performs communication on the communication resource of the first communication group includes: The first communication apparatus performs communication on a resource other than the second non-candidate resource in the communication resource of the first communication group.

According to the foregoing solution, if the communication resource of the first communication group includes an unavailable resource (that is, the second non-candidate resource) of the first communication group, the first communication apparatus performs communication on the resource other than the second non-candidate resource in the communication resource of the first communication group. If the first communication apparatus is a sending communication apparatus, the first communication apparatus does not send a signal on the second non-candidate resource, and correspondingly, a receiving communication apparatus in the first communication group does not receive a signal on the second non-candidate resource. If the first communication apparatus is a receiving communication apparatus, the first communication apparatus does not receive a signal on the second non-candidate resource, and correspondingly, a sending communication apparatus in the first communication group does not send a signal on the second non-candidate resource. In this way, communication apparatuses in the first communication group can accurately receive and send a signal, to implement mutual communication.

Optionally, the second non-candidate resource may be configured by using dedicated signaling (or information), for example, signaling of the first communication apparatus or signaling of the first communication group.

It should be noted that the first non-candidate resource is the resource that cannot be used for the communication of the N communication groups, and may be referred to as the unavailable resource of the N communication groups. The second non-candidate resource is a resource that cannot be used for the communication of the first communication group, and may be referred to as the unavailable resource of the first communication group. The unavailable resource may be a resource pre-allocated for another purpose. For example, the unavailable resource may include a resource occupied by a conventional communication system (for example, a communication apparatus in an NR system cannot use a resource occupied by a cell reference signal (cell reference signal, CRS), a synchronization signal, or the like of an LTE system), to ensure compatibility between communication systems. The unavailable resource may be a reserved resource, for example, a reserved resource used for transmission of another signal, or a resource reserved for another reason, for example, a reserved channel state information reference signal CSI-RS resource, a reserved synchronization signal resource, or a reserved transmission resource of a special service. The unavailable resource may include a periodic resource, a semi-persistent resource, or the like that has been allocated to another communication apparatus. However, this application is not limited thereto.

With reference to the first aspect, in some implementations of the first aspect, that the first communication apparatus performs communication on the communication resource of the first communication group includes: When a proportion of the second non-candidate resource in the communication resource of the first communication group is less than or equal to a resource threshold, the first communication apparatus performs communication on the resource other than the second non-candidate resource in the communication resource of the first communication group, where the second non-candidate resource is not used for the communication of the first communication group.

According to the foregoing solution, when a proportion of the unavailable resource in the communication resource of the first communication group is greater than the resource threshold, a code rate is high after rate matching. This causes low communication reliability and a low probability of correct transmission. Therefore, the first communication apparatus may not perform communication on the communication resource when the proportion of the unavailable resource in the communication resource is greater than the resource threshold, to reduce a resource waste.

With reference to the first aspect, in some implementations of the first aspect, the first information further includes M pieces of communication group indication information and second resource allocation information, M is a positive integer, M+N is less than or equal to Q, the M pieces of communication group indication information indicate M scheduled communication groups, the second resource allocation information indicates a second resource, and the second resource includes communication resources of the M communication groups, or the second resource is a communication resource of one of the M communication groups.

According to the foregoing solution, the second communication apparatus may schedule a plurality of communication group sets, and a communication apparatus in each communication group set determines a communication resource of a communication group based on a same piece of resource allocation information. For example, one communication group set includes the N communication groups, and the N communication groups determine the respective communication resources based on the first resource allocation information. Another communication group set includes the M communication groups, and the M communication groups determine respective communication resources based on the first resource allocation information. This improves scheduling flexibility of the second communication apparatus.

According to a second aspect, a resource determining method is provided. The method includes: A second communication apparatus determines communication resources of N communication apparatuses. The second communication apparatus sends first information, where the first information is used to schedule communication of Q communication groups, Q is an integer greater than 1, one communication group includes a sending communication apparatus and a receiving communication apparatus, the first information includes N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups.

With reference to the second aspect, in some implementations of the second aspect, the first resource includes the communication resources of the N communication groups, or the first resource is a communication resource of a second target communication group in the N communication groups.

With reference to the second aspect, in some implementations of the second aspect, there is an association relationship between first communication group indication information and a communication resource of a first communication group.

With reference to the second aspect, in some implementations of the second aspect, the method includes: The second communication apparatus determines a ranking of the first communication group indication information in the N pieces of communication group indication information based on a ranking of the communication resource of the first communication group in the communication resources of the N communication groups, where the first communication group indication information indicates the first communication group.

By way of example and not limitation, the communication resources of the N communication groups are sequentially arranged based on an arrangement order of the N pieces of communication group indication information in the first information.

With reference to the second aspect, in some implementations of the second aspect, sizes of the communication resources of the N communication groups in the first resource are the same; or sizes of communication resources of communication groups other than a first target communication group in the N communication groups are the same, and a size of a communication resource of the first target communication group is different from that of a communication resource of one communication group other than the first target communication group.

By way of example and not limitation, the first target communication group is a communication group indicated by the 1st or last piece of communication group indication information in the N pieces of communication group indication information.

With reference to the second aspect, in some implementations of the second aspect, that a second communication apparatus determines communication resources of N communication apparatuses includes: determining the communication resources of the N communication groups in a resource other than a first non-candidate resource. The first non-candidate resource is a resource that is not used for communication of the N communication groups.

With reference to the second aspect, in some implementations of the second aspect, the first information further includes M pieces of communication group indication information and second resource allocation information, M is a positive integer, M+N is less than or equal to Q, the M pieces of communication group indication information indicate M scheduled communication groups, and the second resource allocation information indicates a second resource. The second resource includes communication resources of the M communication groups, or the second resource is a communication resource of one of the M communication groups.

According to a third aspect, a communication apparatus is provided. In a design, the apparatus may include a one-to-one corresponding module for performing the method/operation/step/action described in the first aspect. The module may be implemented by using a hardware circuit, software, or a combination of a hardware circuit and software. In a design, the apparatus includes: a transceiver unit, configured to receive first information, where the first information is used to schedule communication of Q communication groups, Q is an integer greater than 1, one communication group includes a sending communication apparatus and a receiving communication apparatus, the first information includes N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups; and a processing unit, configured to determine a communication resource of a first communication group based on the first resource, where the first communication group includes a first communication apparatus, and the N pieces of communication group indication information include first communication group indication information indicating the first communication group. The transceiver unit is further configured to perform communication on the communication resource of the first communication group.

With reference to the third aspect, in some implementations of the third aspect, the first resource includes the communication resources of the N communication groups, or the first resource is a communication resource of a second target communication group in the N communication groups.

With reference to the third aspect, in some implementations of the third aspect, there is an association relationship between the first communication group indication information and the communication resource of the first communication group.

With reference to the third aspect, in some implementations of the third aspect, the processing unit is specifically configured to determine the communication resource of the first communication group based on the first resource and a ranking of the first communication group indication information in the N pieces of communication group indication information.

With reference to the third aspect, in some implementations of the third aspect, the processing unit is specifically configured to determine the communication resource of the first communication group in a resource other than a first non-candidate resource based on the first resource. The first non-candidate resource is a resource that is not used for communication of the N communication groups.

With reference to the third aspect, in some implementations of the third aspect, the communication resource of the first communication group includes a second non-candidate resource, the second non-candidate resource is not used for communication of the first communication group, and the transceiver unit is specifically configured to perform communication on a resource other than the second non-candidate resource in the communication resource of the first communication group.

With reference to the third aspect, in some implementations of the third aspect, the transceiver unit is specifically configured to: when a proportion of the second non-candidate resource in the communication resource of the first communication group is less than or equal to a resource threshold, perform communication on the resource other than the second non-candidate resource in the communication resource of the first communication group. The second non-candidate resource is not used for the communication of the first communication group.

With reference to the third aspect, in some implementations of the third aspect, the first information further includes M pieces of communication group indication information and second resource allocation information, M is a positive integer, M+N is less than or equal to Q, the M pieces of communication group indication information indicate M scheduled communication groups, the second resource allocation information indicates a second resource, and the second resource includes communication resources of the M communication groups, or the second resource is a communication resource of one of the M communication groups.

According to a fourth aspect, a communication apparatus is provided. In a design, the apparatus may include a one-to-one corresponding module for performing the method/operation/step/action described in the second aspect. The module may be implemented by using a hardware circuit, software, or a combination of a hardware circuit and software. In a design, the apparatus includes: a processing unit, configured to determine communication resources of N communication apparatuses; and a transceiver unit, configured to send first information, where the first information is used to schedule communication of Q communication groups, Q is an integer greater than 1, one communication group includes a sending communication apparatus and a receiving communication apparatus, the first information includes N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups.

With reference to the fourth aspect, in some implementations of the fourth aspect, the first resource includes the communication resources of the N communication groups, or the first resource is a communication resource of a second target communication group in the N communication groups.

With reference to the fourth aspect, in some implementations of the fourth aspect, there is an association relationship between first communication group indication information and a communication resource of a first communication group.

With reference to the fourth aspect, in some implementations of the fourth aspect, the processing unit is further configured to determine a ranking of the first communication group indication information in the N pieces of communication group indication information based on a ranking of the communication resource of the first communication group in the communication resources of the N communication groups, where the first communication group indication information indicates the first communication group.

With reference to the fourth aspect, in some implementations of the fourth aspect, the processing unit is specifically configured to determine the communication resources of the N communication groups in a resource other than a first non-candidate resource. The first non-candidate resource is a resource that is not used for communication of the N communication groups.

With reference to the fourth aspect, in some implementations of the fourth aspect, the first information further includes M pieces of communication group indication information and second resource allocation information, M is a positive integer, M+N is less than or equal to Q, the M pieces of communication group indication information indicate M scheduled communication groups, the second resource allocation information indicates a second resource, and the second resource includes communication resources of the M communication groups, or the second resource is a communication resource of one of the M communication groups.

According to a fifth aspect, a communication apparatus is provided, and includes a processor. The processor may implement the method in any one of the first aspect and the possible implementations of the first aspect. Optionally, the communication apparatus further includes a memory. The processor is coupled to the memory, and may be configured to execute instructions in the memory, to implement the method in any one of the first aspect and the possible implementations of the first aspect. Optionally, the communication apparatus further includes a communication interface, and the processor is coupled to the communication interface. In this embodiment of this application, the communication interface may be a transceiver, a pin, a circuit, a bus, a module, or another type of communication interface. This is not limited.

According to a sixth aspect, a communication apparatus is provided, and includes a processor. The processor may implement the method in any one of the second aspect and the possible implementations of the second aspect. Optionally, the communication apparatus further includes a memory. The processor is coupled to the memory, and may be configured to execute instructions in the memory, to implement the method in any one of the second aspect and the possible implementations of the second aspect. Optionally, the communication apparatus further includes a communication interface, and the processor is coupled to the communication interface.

In an implementation, the communication apparatuses/communication apparatus provided in the fifth aspect and/or the sixth aspect each are/is a communication device. When the communication apparatus is the communication device, the communication interface may be a transceiver or an input/output interface.

In another implementation, the communication apparatuses/communication apparatus provided in the fifth aspect and/or the sixth aspect each are/is a chip configured in a communication device. When the communication apparatus is the chip configured in the communication device, the communication interface may be an input/output interface.

Optionally, the transceiver may be a transceiver circuit. Optionally, the input/output interface may be an input/output circuit.

According to a seventh aspect, a processor is provided, and includes an input circuit, an output circuit, and a processing circuit. The processing circuit is configured to: receive a signal through the input circuit, and transmit a signal through the output circuit, to enable the processor to perform the method in any one of the first aspect or the second aspect and the possible implementations of the first aspect or the second aspect.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this embodiment of this application.

According to an eighth aspect, a computer program product is provided. The computer program product includes a computer program (which may also be referred to as code or instructions). When the computer program is run, a computer is enabled to perform the method in any one of the first aspect or the second aspect and the possible implementations of the first aspect or the second aspect.

According to a ninth aspect, a computer-readable storage medium is provided. The computer-readable storage medium stores a computer program (which may also be referred to as code or instructions). When the computer program is run on a computer, the computer is enabled to perform the method in any one of the first aspect or the second aspect and the possible implementations of the first aspect or the second aspect.

According to a tenth aspect, a communication system is provided, and includes the foregoing plurality of communication groups and one or more second communication apparatuses.

## BRIEF DESCRIPTION OF DRAWINGS

FIG. 1 is a diagram of a communication system applicable to an embodiment of this application;
FIG. 2 is a diagram of Uu interface communication according to an embodiment of this application;
FIG. 3 is a diagram of sidelink communication according to an embodiment of this application;
FIG. 4 is a diagram of device communication in an industrial scenario according to an embodiment of this application;
FIG. 5 is an interaction diagram of a resource determining method according to an embodiment of this application;
FIG. 6 is a diagram of an information structure of first information according to an embodiment of this application;
FIG. 7 to FIG. 9 are some diagrams of a first resource according to embodiments of this application;
FIG. 10 to FIG. 17 are some diagrams of communication resources of N communication groups according to embodiments of this application;
FIG. 18 and FIG. 19 each are a diagram of a first non-candidate resource according to an embodiment of this application;
FIG. 20 is a diagram of a communication group set according to an embodiment of this application;
FIG. 21 is a block diagram of a communication apparatus according to an embodiment of this application; and
FIG. 22 and FIG. 23 each are another diagram of a structure of a communication apparatus according to an embodiment of this application.

## DESCRIPTION OF EMBODIMENTS

The following describes technical solutions in this application with reference to the accompanying drawings.

In embodiments of this application, "/" may indicate an "or" relationship between associated objects. For example, A/B may represent A or B. "And/or" may indicate that there are three relationships between the associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity and an execution sequence, and the terms such as "first" and "second" do not indicate a definite difference. In embodiments of this application, a word such as "example" or "for example" is used to represent giving an example, an illustration, or a description. Any embodiment or design scheme described as "example" or "for example" should not be explained as being more preferred or having more advantages than another embodiment or design scheme. The word such as "example" or "for example" is used to present a related concept in a specific manner for ease of understanding. In embodiments of this application, at least one (type) may alternatively be described as one (type) or a plurality of (types), and the plurality of (types) may be two (types), three (types), four (types), or more (types). This is not limited in this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, and a wireless fidelity (wireless fidelity, Wi-Fi) system. In addition, a communication method provided in this application may be further applied to a communication system evolved after 5G, for example, a 6th generation (6th generation, 6G) communication system, a future communication system, another communication system, or the like. This is not limited in this application.

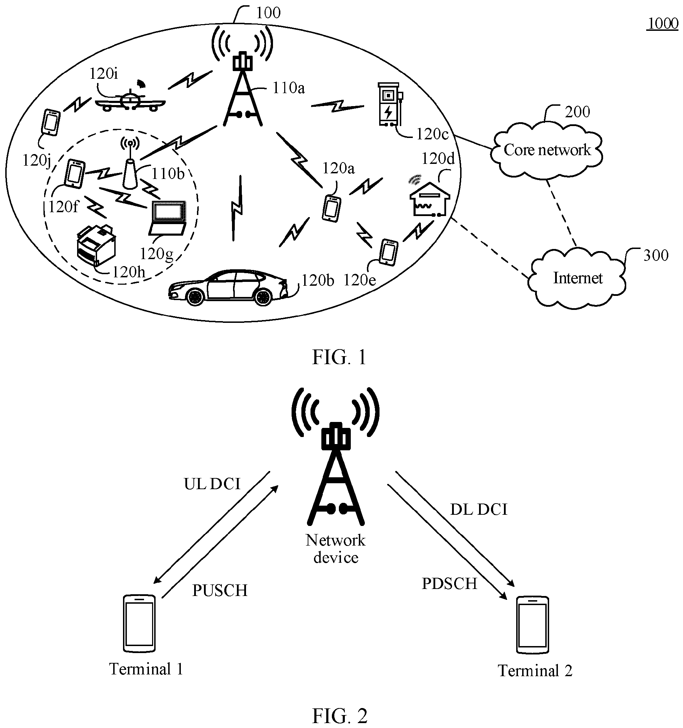

FIG. 1 is a diagram of an architecture of a communication system 1000 applicable to this application. As shown in FIG. 1, the communication system includes a radio access network (radio access network, RAN) 100 and a core network (core network, CN) 200. Optionally, the communication system 1000 may further include the internet 300. The radio access network 100 may include at least one access network device (for example, 110a and 110b in FIG. 1), and may further include at least one terminal (for example, 120a to 120j in FIG. 1). The terminal and the access network device may perform wireless communication with each other by using a radio resource, and terminals may also perform wireless communication with each other by using a radio resource. The access network device is connected to the core network in a wireless or wired manner. A core network device and the access network device may be different physical devices that are independent, or may be a same physical device that integrates functions of the core network device and functions of the access network device. Alternatively, there may be another possible case. For example, the functions of the access network device and a part of functions of the core network device may be integrated into one physical device, and another physical device implements a remaining part of functions of the core network device. Physical existence forms of the core network device and the access network device are not limited in this application. Access network devices may be connected to each other in a wired or wireless manner. FIG. 1 is merely a diagram. The communication system may further include another network device, for example, may further include a wireless relay device and a wireless backhaul device.

The access network device may be a base station (base station), a NodeB (NodeB), an evolved NodeB (evolved NodeB, eNodeB or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next-generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that implements a part of functions of a base station, for example, may be a central unit (central unit, CU), a distributed unit (distributed unit, DU), a central unit-control plane (CU control plane, CU-CP) module, or a central unit-user plane (CU user plane, CU-UP) module. The access network device may be a macro base station (for example, 110a in FIG. 1), may be a micro base station or an indoor base station (for example, 110b in FIG. 1), or may be a relay node, a donor node, a device that undertakes a base station function in device-to-device (Device-to-Device, D2D), vehicle-to-everything (vehicle-to-everything, V2X), or machine-to-machine (machine-to-machine, M2M) communication, or the like. A specific technology and a specific device form that are used by the access network device are not limited in this application. The 5G system may also be referred to as a new radio (new radio, NR) system.

The terminal may also be referred to as a terminal device, user equipment (user equipment, UE), a mobile station, a mobile terminal, or the like. The terminal may be widely used in various scenarios for communication. The scenarios include, for example, but are not limited to, at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), D2D, V2X, machine-type communication (machine-type communication, MTC), internet of things (internet of things, IOT), virtual reality, augmented reality, industrial control, self-driving, telemedicine, a smart grid, smart furniture, smart office, a smart wearable, smart transportation, a sensing terminal, a terminal with integrated sensing and communication, or a smart city. The terminal may be a mobile phone (for example, 120a, 120j, and 120e in FIG. 1), a tablet computer, a computer with a wireless transceiver function (for example, 120g in FIG. 1), customer-premises equipment (customer-premises equipment, CPE), a smart point of sale (point of sale, POS) machine, a wearable device, a vehicle (for example, 120b in FIG. 1), an uncrewed aerial vehicle, a helicopter, an airplane (for example, 120i in FIG. 1), a ship, a robot, a robot arm, a sensor, a perceptron, a smart home device (for example, 120h in FIG. 1), or the like. A specific technology and a specific device form that are used by the terminal are not limited in this application.

The access network device and/or the terminal may be deployed on land, including an indoor device, an outdoor device, a handheld device, or a vehicle-mounted device; may be deployed on water; or may be deployed on an airplane, a balloon, and an artificial satellite in the air. An environment/scenario in which the access network device and the terminal are located is not limited in this application. The access network device and the terminal may be deployed in a same environment/scenario or different environments/scenarios. For example, the access network device and the terminal are both deployed on the land; or the access network device is deployed on the land, and the terminal is deployed on the water. Examples are not provided one by one.

Roles of the access network device and terminal may be relative. For example, the helicopter or the uncrewed aerial vehicle 120i in FIG. 1 may be configured as a mobile access network device. For those terminals 120j that access the radio access network 100 via 120i, the terminal 120i is an access network device. However, for the access network device 110a, 120i may be a terminal, that is, 110a and 120i may communicate with each other by using a radio air interface protocol. Alternatively, 110a and 120i communicate with each other by using an interface protocol between the access network devices. In this case, for 110a, 120i is also an access network device. Therefore, the access network device and the terminal may be collectively referred to as communication apparatuses (or communication devices). 110a and 110b in FIG. 1 may be referred to as communication apparatuses having a function of the access network device, and 120a to 120j in FIG. 1 may be referred to as communication apparatuses having a function of the terminal.

The following describes related technologies and terms in embodiments of this application.

1. Control information used to schedule a data channel

The control information used to schedule the data channel includes but is not limited to downlink control information (downlink control information, DCI) that is sent by a network device and that is used to schedule a physical downlink shared channel (physical downlink shared channel, PDSCH), DCI that is used to schedule a physical uplink shared channel (physical uplink shared channel, PUSCH), DCI that is sent by the network device and that is used to schedule a physical sidelink control channel (physical sidelink control channel, PSCCH) on which (sidelink control information, SCI) is carried and a physical sidelink shared channel (physical sidelink shared channel, PSSCH), SCI that is sent by a transmit end terminal and that is used to schedule the PSSCH, and the like. The control information indicates a plurality of scheduling parameters by using a plurality of pieces of indication information, for example, time domain resource allocation information and frequency domain resource allocation information. The time domain resource allocation information indicates a time domain position of a communication resource, and the frequency domain resource allocation information indicates a frequency domain position of the communication resource. In addition, the control information may further include MCS indication information indicating a modulation and coding scheme (modulation and coding scheme, MCS), redundancy version (redundancy version, RV) indication information, a new data indicator (new data indicator, NDI) field, precoding indication information, indication information indicating a hybrid automatic repeat request (hybrid automatic repeat request, HARQ) process, and the like. A control information receive end sends or receives data based on scheduling information indicated by each piece of indication information in the control information.

2. Communication between a terminal device and a network device

For example, the terminal and the network device may communicate with each other through a user equipment-universal mobile telecommunications system terrestrial radio access network (UE-UTRAN, Uu) interface. The network device may send DCI to the terminal device to schedule the data channel to communicate with the terminal device. The network device may send uplink (uplink, UL) DCI to the terminal, to schedule the terminal to send uplink data on the PUSCH. As shown in FIG. 2, the network device may send UL DCI to a terminal 1, and the terminal 1 sends uplink data to the network device on the PUSCH based on the received UL DCI. Alternatively, the network device may send downlink (downlink, DL) DCI to the terminal, to schedule the PUSCH to send downlink data to the terminal. As shown in FIG. 2, the network device may send DL DCI to a terminal 2, and the terminal 2 receives downlink data from the network device on the PDSCH based on the received DL DCI.

3. Communication between terminals

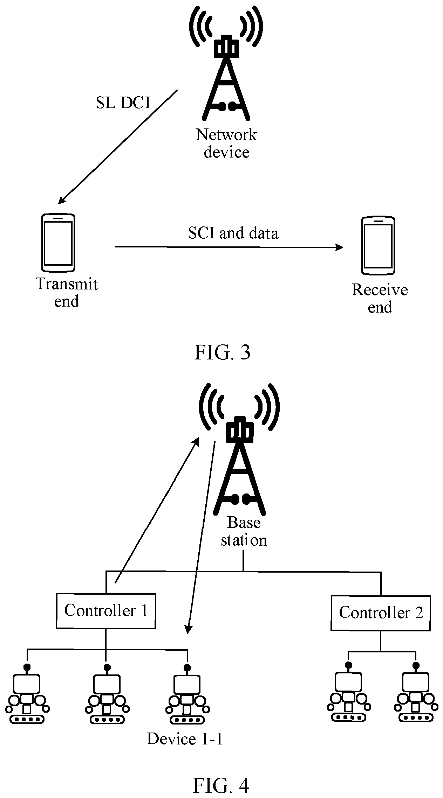

For example, the terminals may communicate with each other through a proximity-based service communication (interface) 5 (proximity-based service communication (interface) 5, PC5) interface. PC5 interface communication may also be referred to as sidelink (sidelink, SL) communication. For the PC5 interface communication, there are two communication modes. One is a communication mode based on scheduling of the network device. As shown in FIG. 3, the network device sends SL DCI to a transmit end terminal, where the SL DCI is used to schedule the transmit end terminal to perform sidelink communication, and the transmit end terminal sends SCI and data to a receive end terminal based on the SL DCI. The receive end terminal receives the SCI, and receives the data based on the SCI. The other is a communication mode in which the terminal autonomously selects a communication resource. The network device configures a semi-persistent available communication resource for the terminal. The transmit end terminal may determine, by sensing (for example, receiving SCI sent by another terminal), a resource that can be used by the transmit end to send data and that is in the semi-persistent resource, and send SCI and the data on the resource. The receive end terminal performs blind detection on the SCI, and receives, based on the detected SCI, the data sent by the transmit end terminal.

4. Ultra-reliable low-latency communication (ultra-reliability low latency communication)

The URLLC is critical for wide application of self-driving, industrial manufacturing, internet of vehicles, a smart grid, and other fields. Smart industrial manufacturing has high requirements on a communication latency and stability of a device. For example, in a service area, 50 terminals can be supported. In an end-to-end latency of 1 ms, communication service availability (communication system available, CSA) of a 40-byte data packet is required to be between 99.9999% and 99.999999%. The CSA is defined as follows: If a packet received by the receive end is damaged or is not transmitted to the receive end in time (exceeding an allowed maximum end-to-end latency), the service is considered unavailable.

In an actual industrial scenario, a two-layer structure is usually used for deployment. For example, there is a base station, a controller, and a bottom device. As shown in FIG. 4, for communication between a controller 1 and a bottom device 1-1, the controller 1 needs to first communicate with a base station, and then the base station communicates with the bottom device 1-1. However, it is found in an experiment that, in a manner of sequentially scheduling a communication group to perform communication, a large latency is caused, and the manner can be implemented only with assistance of the base station in the first and second steps. In addition, when a quantity of devices is large, a communication latency is large because a control resource is limited. Therefore, currently, communication that supports 50 terminals and meets the CSA requirement cannot be implemented.

To improve resource utilization and reduce scheduling and transmission latencies, this application proposes that a plurality of communication groups may be scheduled by using one piece of information (for example, control information) to perform communication. However, if the control information separately indicates a scheduling parameter of each scheduled communication group, overheads of the control information is large. It is considered that, in some scenarios, some scheduling parameters of the plurality of communication groups may be the same. For example, channel states of the plurality of communication groups scheduled by using the control information are close, and modulation and coding schemes of the plurality of communication groups may be the same. For another example, in a factory scenario, the access network device schedules a plurality of terminals to report channel state information to the controller, the channel state information of the plurality of terminals is similar, and sizes of resources that are allocated by the network device to the plurality of terminals for carrying the state information may be the same. Therefore, this application proposes that the control information may include common indication information, the common indication information indicates one scheduling parameter (for example, a resource size or an MCS), and the plurality of communication groups scheduled by using the control information may determine respective scheduling parameters based on the scheduling parameter indicated by the common indication information.

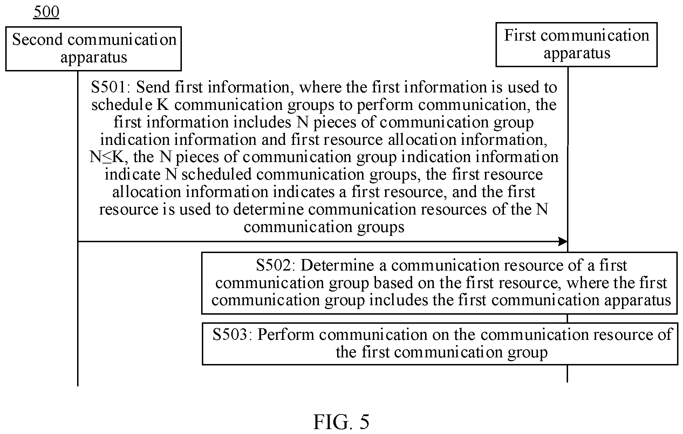

FIG. 5 is a schematic flowchart of a resource determining method 500 according to an embodiment of this application. In the resource determining method 500, a second communication apparatus sends first information for scheduling Q communication groups, and communication apparatuses in the Q communication groups may receive the first information, and perform communication based on the first information. The Q communication groups include a first communication group, and the first communication group includes a first communication apparatus. In the resource determining method 500, the first communication apparatus is used as an example for description. For a manner in which another apparatus in the Q communication groups performs communication based on the received first information, refer to the first communication apparatus for implementation. For brevity, details are not described herein again.

S501: The second communication apparatus sends the first information, where the first information is used to schedule the Q communication groups to perform communication, the first information includes N pieces of communication group indication information and first resource allocation information, N is less than or equal to Q, the N pieces of communication group indication information indicate N scheduled communication groups, the first resource allocation information indicates a first resource, and the first resource is used to determine communication resources of the N communication groups.

For example, the first information may be scheduling information or control information. The first information may be referred to as receiving control information (receiving control information, RxCI). The RxCI may be carried on a physical reception link control channel (physical reception link control channel, PRxCCH). The PRxCCH is a channel on which a terminal device receives the control information. For example, the second communication apparatus may be a network device, or the second communication apparatus is configured in the network device, and the first information may be DCI. Alternatively, the second communication apparatus may be a terminal device, or the second communication apparatus is configured in the terminal device, and the first information may be SCI.

One communication group includes a sending communication apparatus and a receiving communication apparatus. That the second communication apparatus schedules the Q communication groups to perform communication includes: Each communication group scheduled by the second communication apparatus performs communication in the communication group, and the second communication apparatus may schedule, by using the first information, a plurality of communication groups to separately perform communication in the groups. This can improve scheduling efficiency and resource utilization, and reduce scheduling overheads.

It should be noted that the performing communication in the communication group may include but is not limited to: A sending communication apparatus in the communication group sends data, a reference signal, and/or the like to a receiving communication apparatus in the communication group. For example, the Q communication groups include the first communication group, and the first communication group includes the first communication apparatus and a third communication apparatus. Communication apparatuses in the first communication group may perform communication in the group. For example, the first communication apparatus and the third communication apparatus may perform data and/or reference signal communication. For example, the first communication apparatus may be a sending communication apparatus, and the third communication apparatus may be a receiving communication apparatus. The first communication apparatus sends data and/or a reference signal to the third communication apparatus, and the third communication apparatus receives the data and/or the reference signal from the first communication apparatus. Alternatively, the third communication apparatus may be a sending communication apparatus, and the first communication apparatus may be a receiving communication apparatus. The third communication apparatus sends data and/or a reference signal to the first communication apparatus, and the first communication apparatus receives the data and/or the reference signal from the third communication apparatus. The reference signal may include but is not limited to a sounding reference signal (sounding reference signal, SRS), a channel state information reference signal (channel state information reference signal, CSI-RS), a sensing reference signal, another reference signal, and the like.

Optionally, one or more of the Q communication groups may include the second communication apparatus. In other words, the second communication apparatus may schedule another communication apparatus in a communication group including the second communication apparatus to communicate with the second communication apparatus. For example, the second communication apparatus may be the network device. The network device and one terminal device may form one communication group, and the communication group is denoted as a communication group 1. The Q communication groups scheduled by the network device by using the first information may include the communication group 1. It indicates that the network device schedules the terminal device to communicate with the network device.

A manner in which the communication group indication information in the first information indicates the communication group includes but is not limited to the following implementations:

In an implementation, one piece of communication group indication information in the first information includes a plurality of pieces of apparatus identification information, and a plurality of communication apparatuses identified by the plurality of pieces of apparatus identification information are one of the Q communication groups. One communication apparatus may determine, based on identification information of the communication apparatus included in the communication group indication information in the first information, that the communication apparatus is scheduled by using the first information to perform communication, and determine, based on identification information of another communication apparatus included in the communication group indication information, the another communication apparatus in a communication group to which the communication apparatus belongs.

For example, the communication group indication information includes identification information of the sending communication apparatus and identification information of the receiving communication apparatus. An apparatus corresponding to the identification information of the sending communication apparatus may determine to send a signal after receiving the first information, and an apparatus corresponding to the identification information of the receiving communication apparatus may determine to receive a signal after receiving the first information.

In another implementation, before a communication apparatus receives the first information, a communication group to which the communication apparatus belongs is preconfigured. One piece of communication group indication information in the first information includes one piece of group identification information, and a communication group identified by the group identification information is scheduled. The communication apparatus determines, based on group identification information that is of the communication group to which the communication apparatus belongs and that is included in the communication group indication information, that the communication group to which the communication apparatus belongs is scheduled.

For example, group identification information of the communication group 1 is preconfigured as a group identifier 1, a sending communication apparatus in the communication group 1 is a communication apparatus A, and a receiving communication apparatus is a communication apparatus B. If the communication group indication information in the first information indicates the group identifier 1, the communication apparatus A and the communication apparatus B corresponding to the group identifier 1 may perform communication after receiving the first information. For example, the communication apparatus A serves as the sending communication apparatus to send a signal to the communication apparatus B serving as the receiving communication apparatus. Correspondingly, the communication apparatus B receives the signal from the communication apparatus A.

The first information includes the first resource allocation information, and the first resource allocation information is common information of the N communication groups. By way of example and not limitation, the first resource indicated by the first resource allocation information may be a time domain resource and/or a frequency domain resource. Communication apparatuses in the N communication groups may determine, based on the first resource, a communication resource of a communication group to which each of the communication apparatuses belongs. In comparison with that the second communication apparatus indicates a communication resource of each communication group in the first information, information overheads can be reduced, and resource utilization can be improved.

Optionally, the first resource allocation information may be frequency domain resource allocation information, may be time domain resource allocation information, or may be time domain resource allocation information and frequency domain resource allocation information.

It should be understood that this application is not limited thereto. The first resource allocation information may alternatively be at least one of space domain resource allocation information, code resource allocation information, sequence resource allocation information, or antenna port resource allocation information. In other words, N communication apparatuses may share one piece of resource allocation information in the first information to determine at least one of a space domain resource, a code domain resource, a sequence resource, or an antenna port resource. The following uses an example in which the first resource allocation information is the time domain resource and/or frequency domain resource allocation information for description.

When the first resource allocation information includes only the frequency domain resource allocation information, the communication apparatus may determine the frequency domain resource of the first resource based on the first resource allocation information. For the N communication groups, time domain resources of the first resource may be the same, or may be respectively configured for the N communication groups. This is not limited in this application.

When the first resource allocation information includes only the time domain resource allocation information, the communication apparatus may determine the time domain resource of the first resource based on the first resource allocation information. For the N communication groups, frequency domain resources of the first resource may be the same, or may be respectively configured for the N communication groups. This is not limited in this application.

When the first resource allocation information includes only the frequency domain resource allocation information and the time domain resource allocation information, the communication apparatus may determine the time domain resource and the frequency domain resource of the first resource based on the first resource allocation information.

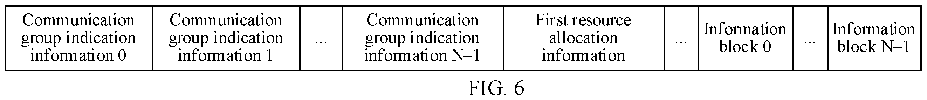

For example, the first information may be shown in FIG. 6. The first information includes the N pieces of communication group indication information. The N pieces of communication group indication information indicate the N communication groups. For example, communication group indication information 0 indicates a communication group 0, communication group indication information 1 indicates the communication group 1, and communication group indication information N-1 indicates a communication group N-1. The first information further includes the first resource allocation information, the first resource allocation information indicates the first resource, and the communication apparatuses in the N communication groups may determine respective communication resources based on the first resource. Optionally, the first information may further include one information block corresponding to each of the N communication groups. For example, an information block 0 corresponds to the communication group 0, and an information block N-1 corresponds to the communication group N-1. One information block indicates scheduling parameters of one communication group. For example, the scheduling parameters may include but not limited to an encoding/decoding parameter, parameters related to precoding and feedback information, and the like. However, this application is not limited thereto. For example, one piece of communication group indication information may be included in one information block.

S502: The first communication apparatus determines a communication resource of the first communication group based on the first resource, where the first communication group includes the first communication apparatus.

The N pieces of communication group indication information include first communication group indication information, and the first communication group indication information indicates the first communication group. After receiving the first information, the first communication apparatus determines the first resource based on the first resource allocation information, and determines the communication resource of the first communication group based on the first resource. This includes but is not limited to at least one of the following implementations:

In an implementation 1, the first resource is the frequency domain resource, and the first resource allocation information specifically indicates a frequency domain position of the first resource.

In the implementation 1, the first resource allocation information may be referred to as the frequency domain resource allocation information. An allocation unit of the frequency domain resource is a frequency domain unit. The frequency domain unit may be but is not limited to a resource block (resource block, RB), a resource block group (RB group, RBG), or a subcarrier group including a plurality of subcarriers. The RBG includes one or more RBs. Alternatively, the frequency domain unit may be a virtual resource, for example, a virtual resource block (virtual resource block, VRB), or may be a physical resource, for example, a physical resource block (physical resource block, PRB). There may be a mapping relationship between the virtual resource and the physical resource, and the mapping relationship may be non-interleaved mapping or interleaved mapping. This is not limited in this application.

For example, the first resource allocation information may indicate identification information of a start frequency domain unit of the first resource, and indicate a quantity of frequency domain units included in the first resource.

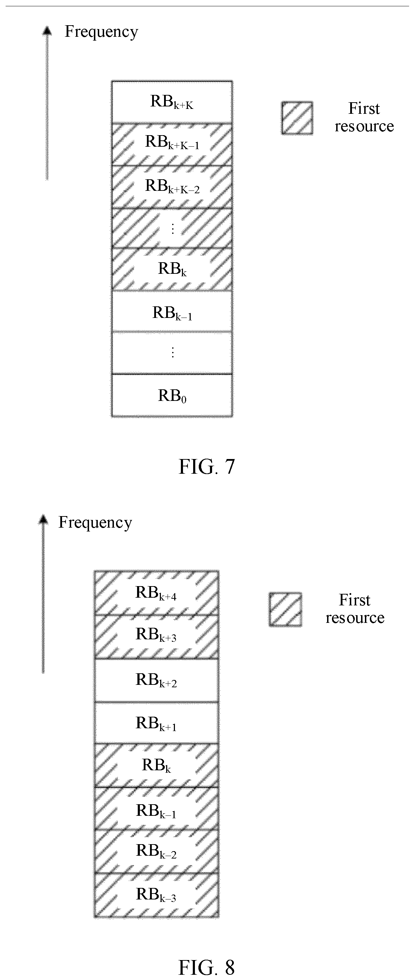

As shown in FIG. 7, an example in which the frequency domain unit is the RB is used, and the first resource is K consecutive RBs whose start RB is an $RB_k$. The first resource allocation information may indicate identification information k of the $RB_k$ and a quantity K of RBs included in the first resource. A communication apparatus receiving the first information may determine, based on the first resource allocation information, that the first resource is the K consecutive RBs from the $RB_k$ to an $RB_{k+K-1}$.

For example, the first resource allocation information may indicate a resource indicator value (resource indicator value, RIV). The RIV corresponds to a start RB and a quantity of consecutive RBs. A correspondence between the RIV and the start RB and the quantity of RBs may be predefined or preconfigured. The second communication apparatus determines the RIV based on the first resource and the correspondence, and indicates the RIV by using the first resource allocation information. The communication apparatus receiving the first information may determine, based on the RIV indicated by the first resource allocation information and the correspondence, the start RB of the first resource and the quantity of RBs included in the first resource, to determine the first resource.

For another example, the first resource may include inconsecutive frequency domain units. For example, the first resource allocation information may include identification information of each of the frequency domain units forming the first resource. As shown in FIG. 8, the first resource includes identification information of an $RB_{k-3}$ to the $RB_k$, an $RB_{k+3}$, and an $RB_{k+4}$. However, this application is not limited thereto. The first resource allocation information may indicate inconsecutive resources in another indication manner.

Optionally, the communication apparatuses in the N communication groups may determine, based on the first resource allocation information, that frequency domain resources of communication resources of respective communication groups are all the first resource. For example, after receiving the first information, the first communication apparatus may determine, based on the first resource allocation information, that a frequency domain resource of the communication resource of the first communication group is the first resource.

For example, the first resource indicated by the first resource allocation information is an RB 1 to an RB n. The N communication groups share the first resource allocation information in the first information to determine the frequency domain resources of the communication resources, that is, the frequency domain resources of the communication resources of the N communication groups are all the RB 1 to the RB n. A communication apparatus in each communication group may determine, based on the first resource allocation information, that a frequency domain resource of a communication resource of the communication group to which the communication apparatus belongs is the RB 1 to the RB n. For example, a communication apparatus in the communication group 1 may determine that a frequency domain resource of a communication resource of the communication group 1 is the RB 1 to the RB n, and a communication apparatus in a communication group N may also determine that a frequency domain resource of a communication resource of the communication group N is the RB 1 to the RB n. Optionally, time domain resources of the communication resources of the N communication groups may be different. However, this application is not limited thereto.

Optionally, the first information further includes a plurality of pieces of time domain resource indication information corresponding to the N communication groups. The first communication apparatus determines a time domain resource of the communication resource of the first communication group based on time domain resource indication information corresponding to the first communication group.

For example, the first information further includes N pieces of time domain resource indication information, and one of the N pieces of time domain resource indication information indicates a time domain resource of a communication resource of one communication group. The first communication apparatus determines the time domain resource of the communication resource of the first communication group based on the time domain resource indication information corresponding to the first communication group, so that the first communication apparatus determines a frequency domain position and a time domain position of the communication resource of the first communication group.

For example, the resources of the N communication groups are time-division-multiplexed. In other words, the communication resources of the N communication groups have a same frequency domain resource and different time domain resources. All of the communication apparatuses in the N communication groups may determine, based on the first resource allocation information, that the frequency domain resources of the communication resources of the communication groups to which the communication apparatuses belong are the RB 1 to the RB n. In addition, the communication apparatus in each communication group determines a time domain resource of the communication resource of the communication group based on time domain resource indication information corresponding to the communication group in the first information. For example, the frequency domain resource of the communication resource of the communication group 1 is the RB 1 to the RB n, and a time domain resource is a symbol 1. A frequency domain resource of a communication group 2 is the RB 1 to the RB n, and a time domain resource is a symbol 2.

In an implementation 2, the first resource is the time domain resource, and the first resource allocation information specifically indicates a time domain position of the first resource.

In the implementation 2, the first resource allocation information may be referred to as the time domain resource allocation information. An allocation unit of the time domain resource is a time unit, and the time unit may be but is not limited to an orthogonal frequency division multiple access (orthogonal frequency division multiplexing, OFDM) symbol, a symbol group including a plurality of OFDM symbols, or a slot.

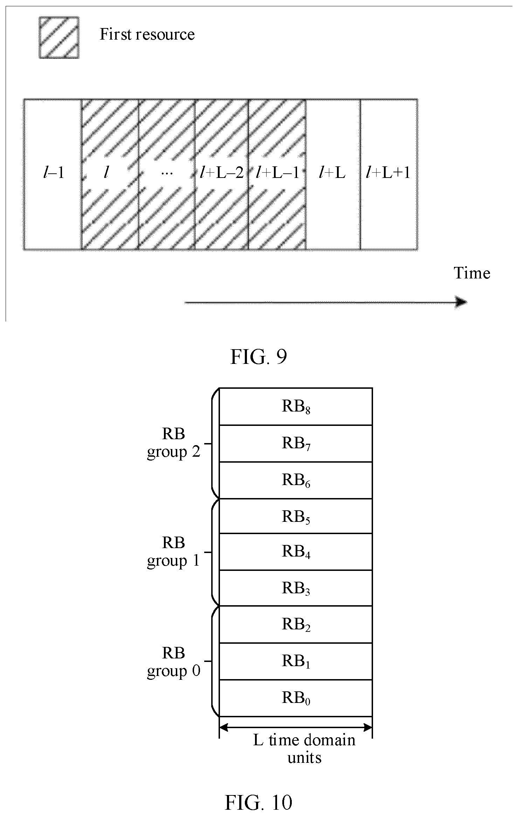

For example, the first resource allocation information may indicate identification information of a start time unit of the first resource, and indicate a quantity of time units included in the first resource. As shown in FIG. 9, the first resource is L consecutive time units whose start time unit is a time unit $l$. The first resource allocation information may indicate identification information $l$ of the time unit $l$ and the quantity L of time units included in the first resource. A communication apparatus receiving the first information may determine, based on the first resource allocation information, that the first resource is the L consecutive time units from the time unit $l$ to a time unit $l+L-1$.

For another example, the first resource allocation information may indicate a start and length indicator value (start and length indicator value, SLIV). The SLIV corresponds to a start time unit and a quantity of consecutive time units. A correspondence between the SLIV and the start time unit and the quantity of time units may be predefined or preconfigured. The second communication apparatus determines the SLIV based on the first resource and the correspondence, and indicates the SLIV by using the first resource allocation information. The communication apparatus receiving the first information may determine, based on the SLIV indicated by the first resource allocation information and the correspondence, the start time unit of the first resource and the quantity of time units included in the first resource, to determine the first resource. However, this application is not limited thereto. The first resource may alternatively include time units that are inconsecutive in time.

Optionally, the communication apparatuses in the N communication groups may determine, based on the first resource allocation information, that time domain resources of communication resources of respective communication groups are all the first resource. For example, after receiving the first information, the first communication apparatus may determine, based on the first resource allocation information, that a time domain resource of the communication resource of the first communication group is the first resource.

For example, the first resource indicated by the first resource allocation information is a symbol 1 to a symbol n. The communication apparatuses in the N communication groups share the first resource allocation information in the first information to determine the time domain resources of the communication resources, that is, the time domain resources of the N communication groups are all the symbol 1 to the symbol n. A communication apparatus in each communication group may determine, based on the first resource allocation information, that a time domain resource of a communication resource of the communication group to which the communication apparatus belongs is the symbol 1 to the symbol n. For example, a communication apparatus in the communication group 1 may determine that a time domain resource of a communication resource of the communication group 1 is the symbol 1 to the symbol n, and a communication apparatus in a communication group N may also determine that a time domain resource of a communication resource of the communication group N is the symbol 1 to the symbol n. Optionally, frequency domain resources of the communication resources of the N communication groups may be different. However, this application is not limited thereto.

Optionally, the first information further includes a plurality of pieces of frequency domain resource indication information corresponding to the N communication groups. The first communication apparatus determines a frequency domain resource of the communication resource of the first communication group based on frequency domain resource indication information corresponding to the first communication group.

For example, the first information further includes N pieces of frequency domain resource indication information, and one of the N pieces of frequency domain resource indication information indicates a frequency domain resource of a communication resource of one communication group. The first communication apparatus determines the frequency domain resource of the communication resource of the first communication group based on the frequency domain resource indication information corresponding to the first communication group, so that the first communication apparatus determines a frequency domain position and a time domain position of the communication resource of the first communication group.

For example, the resources of the N communication groups are frequency-division-multiplexed. In other words, the communication resources of the N communication groups have a same time domain resource and different frequency domain resources. All of the communication apparatuses in the N communication groups may determine, based on the first resource allocation information, that the time domain resources of the communication resources of the communication groups to which the communication apparatuses belong are the symbol 1 to the symbol n. In addition, the communication apparatus in each communication group determines a frequency domain resource of the communication resource of the communication group based on frequency domain resource indication information corresponding to the communication group in the first information. For example, the time domain resource of the communication resource of the communication group 1 is the symbol 1 to the symbol n, and a frequency domain resource is an RB 1. A time domain resource of a communication resource of a communication group 2 is the symbol 1 to the symbol n, and a frequency domain resource is an RB n.

In an implementation 3, the first resource is a time-frequency resource. The first resource allocation information indicates a frequency domain position and a time domain position of the first resource. For example, the first resource is a time-frequency resource including K frequency domain units in frequency domain and L time units in time domain. For a specific manner in which the first resource allocation information indicates the frequency domain position and the time domain position of the first resource, refer to the foregoing two implementations. Details are not described herein again.

Optionally, the first resource includes the communication resources of the N communication groups, or the first resource is a communication resource of a second target communication group in the N communication groups.

The following first describes a specific implementation in which the first resource includes the communication resources of the N communication groups.

The first resource includes the communication resource of each of the N communication groups.

For example, when the first resource allocation information includes the frequency domain resource allocation information, that the first resource includes the communication resources of the N communication groups means that, in terms of frequency domain, the frequency domain resource of the first resource includes the frequency domain resources of the communication resources of the N communication groups.

For example, when the first resource allocation information includes the time domain resource allocation information, that the first resource includes the communication resources of the N communication groups means that, in terms of time domain, the time domain resource of the first resource includes the time domain resources of the communication resources of the N communication groups.

For example, when the first resource allocation information includes the frequency domain resource allocation information and the time domain resource allocation information, that the first resource includes the communication resources of the N communication groups means that, in terms of time-frequency domain, a time-frequency domain resource of the first resource includes time-frequency domain resources of the communication resources of the N communication groups.

Optionally, there is an association relationship between the first communication group indication information and the communication resource of the first communication group.

In an implementation, that there is an association relationship between the first communication group indication information and the communication resource of the first communication group includes: A position of the communication resource of the first communication group is related to a ranking of the first communication group indication information in the N pieces of communication group indication information.

Optionally, the first communication apparatus determines the communication resource of the first communication group based on the first resource and the ranking of the first communication group indication information in the N pieces of communication group indication information.

# EP 4 514 010 A2

Optionally, the communication resources of the N communication groups have different frequency domain positions in the first resource, and/or the communication resources of the N communication groups have different time domain positions in the first resource.

For example, that the N communication groups perform frequency division multiplexing (frequency division multiplexing, FDM) on the first resource in frequency domain may be predefined, preconfigured, or indicated by the first information.

For example, the communication resources of the N communication groups have a same size and different frequency domain positions. For the time domain resource, for example, the time domain resources of the communication resources of the N communication groups are all the time domain resource of the first resource, that is, each include L time units in time domain. Quantities of frequency domain units included in the frequency domain resources of the communication resources of the N communication groups are the same.

Optionally, the first communication apparatus determines, based on a quantity N of communication groups corresponding to the first resource allocation information and a quantity K of frequency domain units included in the first resource, that the first resource includes N frequency domain unit groups.

The following describes the technical solutions provided in this embodiment of this application when K is an integer multiple of N. Each of the N frequency domain unit groups includes K/N frequency domain units, and one frequency domain unit group is a communication resource of one communication group. In addition, the first communication apparatus determines the communication resource of the first communication group in the first resource based on a ranking n of the first communication group indication information in the N pieces of communication group indication information, that is, the communication resource of the first communication group is an $n^{th}$ frequency domain unit group in the first resource. It should be noted that, in this embodiment of this application, K/N indicates that K is divided by N.

Optionally, the first resource may include K consecutive frequency domain units in frequency domain. K is a positive integer.

For example, if the first resource is K consecutive frequency domain units whose start frequency domain unit is a frequency domain unit k, and the first resource includes the N frequency domain unit groups, the $1^{st}$ frequency domain unit group is from the frequency domain unit k to a frequency domain unit k+K/N-1, ..., and the $n^{th}$ frequency domain unit group is from a frequency domain unit k+(n-1)*K/N to a frequency domain unit k+n*K/N-1, where n is an integer greater than or equal to 1 and less than or equal to N. If the $1^{st}$ value of n is 0, that is, n is an integer greater than or equal to 0 and less than or equal to N-1, K/N frequency domain units included in the $n^{th}$ frequency domain unit group are a frequency domain unit k+n*K/N to a frequency domain unit k+(n+1)*K/N-1. The communication apparatus in the first communication group determines, in the first resource based on the ranking n of the first communication group indication information in the N pieces of communication group indication information, that the communication resource of the first communication group is the $n^{th}$ frequency domain unit group in the first resource.

An example in which the frequency domain unit is the RB is used. For example, as shown in FIG. 10, the first resource allocation information indicates that the first resource includes nine consecutive RBs: an RB 0 to an RB 8 in frequency domain, that is, K=9. For example, the time domain resource includes L time units in time domain. The first information includes three pieces of communication group indication information (that is, N=3) corresponding to the first resource allocation information. Communication apparatuses in three communication groups may determine, based on the first resource allocation information, that the first resource includes three RB groups, and each RB group includes 9/3=3 RBs, where the RB 0 to the RB 2 form an RB group 0, the RB 3 to the RB 5 form an RB group 1, and the RB 6 to the RB 8 form an RB group 2. A communication apparatus in the communication group 0 indicated by the $1^{st}$ piece of communication group indication information in the three pieces of communication group indication information may determine, based on that a ranking n of the communication group indication information of the communication apparatus in the three pieces of communication group indication information is 0, that a communication resource of the communication group 0 includes the RB group 0. In this case, the communication resource of the communication group 0 is a time-frequency resource including the RB 0, the RB 1, the RB 2, and the L time units in time domain. The communication apparatus in the communication group 1 indicated by the $2^{nd}$ piece of communication group indication information in the three pieces of communication group indication information may determine, based on that a ranking n of the communication group indication information is 1, that the communication resource of the communication group 1 includes the RB group 1. In this case, the communication resource of the communication group 0 is a time-frequency resource including the RB 3, the RB 4, the RB 5, and the L time units in time domain. Similarly, a communication apparatus in a communication group 3 indicated by the $3^{rd}$ piece of communication group indication information in the three pieces of communication group indication information may determine that the communication resource of the communication group 2 is a time-frequency resource including the RB 6, the RB 7, and the RB 8 in the RB group 2 and the L time units in time domain.

Optionally, the first communication apparatus determines the communication resource of the first communication group in the first resource based on a quantity N of communication groups corresponding to the first resource allocation information, a quantity K of frequency domain units included in the first resource, and a ranking n of the first communication group indication information in the N pieces of communication group indication information.

16

For example, if the first resource is K consecutive frequency domain units whose start frequency domain unit is a frequency domain unit k, K/N frequency domain units included in the communication resource of the first communication group are a frequency domain unit k+(n-1)*K/N to a frequency domain unit k+n*K/N-1, where n is an integer greater than or equal to 1 and less than or equal to N. If the 1st value of n is 0, that is, n is an integer greater than or equal to 0 and less than or equal to N-1, the K/N frequency domain units included in the communication resource of the first communication group are a frequency domain unit k+n*K/N to a frequency domain unit k+(n+1)*K/N-1.

An example in which the frequency domain unit is the RB is used. For example, as shown in FIG. 10, the first resource allocation information indicates that the first resource includes nine consecutive RBs: an RB 0 to an RB 8 in frequency domain, that is, k=0 and K=9. For example, the time domain resource includes L time units in time domain. The first information includes three pieces of communication group indication information (that is, N=3) corresponding to the first resource allocation information. Communication apparatuses in three communication groups may determine, based on the first resource allocation information, that the first resource includes the nine RBs, and one communication group corresponds to 9/3=3 RBs. A communication apparatus in the communication group 0 indicated by the 1st piece of communication group indication information in the three pieces of communication group indication information may determine, based on that a ranking n of the communication group indication information of the communication apparatus in the three pieces of communication group indication information is 0, that a communication resource of the communication group 0 includes the RB 0 (that is, when n=0, k+n*K/N=0) to the RB 2 (that is, when n=0, k+(n+1)*K/N-1=2). In this case, the communication resource of the communication group 0 is a time-frequency resource including the RB 0, the RB 1, the RB 2, and the L time units in time domain. The communication apparatus in the communication group 1 indicated by the 2nd piece of communication group indication information in the three pieces of communication group indication information may determine, based on that a ranking n of the communication group indication information is 1, that a communication resource of the communication group 1 includes the RB 3 (that is, when n=1, k+n*K/N=3) to the RB 2 (that is, when n=1, k+(n+1)*K/N-1=5). In this case, the communication resource of the communication group 0 is a time-frequency resource including the RB 3, the RB 4, the RB 5, and the L time units in time domain. Similarly, a communication apparatus in a communication group 3 indicated by the 3rd piece of communication group indication information in the three pieces of communication group indication information may determine that the communication resource of the communication group 2 is the RB 6 (that is, when n=2, k+n*K/N=6) to the RB 8 (that is, when n=2, k+(n+1)*K/N-1=8), that is, a time-frequency resource including the RB 6, the RB 7, the RB 8, and the L time units in time domain.

Optionally, the first resource may include K inconsecutive frequency domain units in frequency domain.

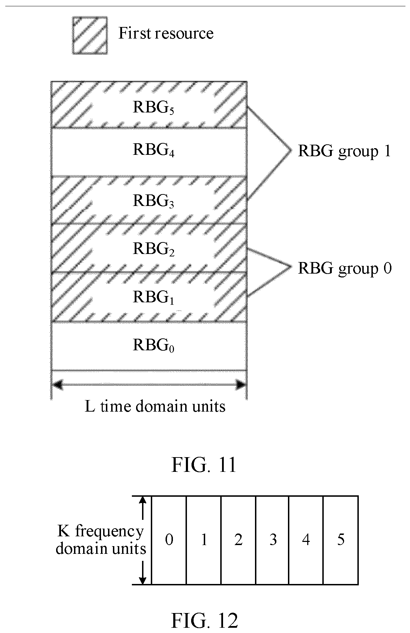

An example in which the frequency domain unit is the RBG is used. As shown in FIG. 11, the first resource allocation information indicates that the first resource includes four RBGs in total: an RBG 1, an RBG 2, an RBG 3, and an RBG 5 in frequency domain. For example, the time domain resource includes L time units in time domain. The first information includes two pieces of communication group indication information (that is, N=2) corresponding to the first resource allocation information. Communication apparatuses in two communication groups indicated by the two pieces of communication group indication information may determine, based on N=2, that the first resource includes two RBG groups, and each RBG group includes 4/2=2 RBs, where the RBG 1 and the RBG 2 form an RBG group 0, and the RBG 3 and the RBG 5 form an RBG group 1. In an example, the communication apparatus in the communication group may determine, based on a ranking n of corresponding communication group indication information in the two pieces of communication group indication information, that a communication resource of the communication group is an nth RBG group. For example, a communication apparatus in the communication group 0 indicated by the 1st communication group may determine, based on that a ranking n is 0, that a communication resource of the communication group 0 includes the RBG group 0. In this case, the communication resource of the communication group 0 is a time-frequency resource including the RBG 1, the RBG 2, and the L time units in time domain. The communication apparatus in the communication group 1 indicated by the 2nd communication group may determine, based on that a ranking n is 1, that the communication resource of the communication group 1 includes the RBG group 1. In this case, the communication resource of the communication group 1 is a time-frequency resource including the RBG 3, the RBG 5, and the L time units in time domain. In another example, the communication apparatus in the communication group may determine, based on a ranking n of corresponding communication group indication information in the two pieces of communication group indication information, an RBG included in a communication resource of the communication group. For example, a communication apparatus in the communication group 0 indicated by the 1st communication group may determine, based on that a ranking n is 0, that a communication resource of the communication group 0 includes the 1st RBG and the 2nd RBG in the first resource, that is, the RBG 1 and the RBG 2. The communication apparatus in the communication group 1 indicated by the 2nd communication group may determine, based on that a ranking n is 1, that the communication resource of the communication group 1 includes the 3rd RBG and the 4th RBG in the first resource, that is, the RBG 3 and the RBG 5.

It should be noted that, in the foregoing two examples, an example in which a communication resource of a communication group is arranged in the first resource based on an arrangement ranking of communication group indication information of the communication group in the N pieces of communication group indication information is used for description. It should be understood that this application is not limited thereto. The communication resource of the communication group may be arranged based on a reverse ranking of the communication group indication information of the communication group in the N pieces of communication group indication information, or based on another arrangement relationship. For example, if the arrangement is performed based on the reverse ranking of the communication group indication information, in the example shown in FIG. 10, the communication resource of the communication group 0 includes the RB group 2, the communication resource of the communication group 1 includes the RB group 1, and the communication resource of the communication group 2 includes the RB group 0. In the example shown in FIG. 11, the communication resource of the communication group 0 includes the RBG group 1, and the communication resource of the communication group 1 includes the RBG group 0.

For example, that the N communication groups perform time division multiplexing (time division multiplexing, TDM) on the first resource in time domain may be predefined, preconfigured, or indicated by the first information.

For example, the communication resources of the N communication groups have a same size and different time domain positions. For the frequency domain resource, for example, the frequency domain resources of the communication resources of the N communication groups are all the frequency domain resource of the first resource, that is, each include K frequency domain units in frequency domain. Quantities of time units included in the time domain resources of the communication resources of the N communication groups are the same.

Optionally, the first communication apparatus determines, based on a quantity N of communication groups corresponding to the first resource allocation information and a quantity L of time units included in the first resource, that the first resource includes N time unit groups.

The following describes the technical solutions provided in this embodiment of this application when L is an integer multiple of N. Each time unit group in the N frequency domain unit groups includes L/N time units, and one time unit group is a communication resource of one communication group. The first communication apparatus determines the communication resource of the first communication group in the first resource based on a ranking n of the first communication group indication information in the N pieces of communication group indication information, that is, the communication resource of the first communication group is an $n^{th}$ time unit group in the first resource. It should be noted that, in this embodiment of this application, L/N indicates that L is divided by N.

Optionally, the first resource may include L consecutive time units in time domain. L is a positive integer.

For example, if the first resource is L consecutive time units whose start time unit is the time unit $l$, and the first resource includes the N time unit groups, the $1^{st}$ time unit group is from the time unit $l$ to a time unit $l+L/N-1$, ..., and the $n^{th}$ time unit group is from a frequency domain unit $l+(n-1)*L/N$ to a time unit $l+n*L/N-1$, where n is an integer greater than or equal to 1 and less than or equal to N. If the $1^{st}$ value of n is 0, that is, n is an integer greater than or equal to 0 and less than or equal to N-1, L/N time units included in the communication resource of the first communication group are a time unit $l+n*L/N$ to a time unit $l+(n+1)*L/N-1$. An example in which the time unit is the OFDM symbol is used. For example, as shown in FIG. 12, the first resource includes six consecutive symbols: a symbol 0 to a symbol 5 in time domain, that is, $l=0$ and L=6. For example, the frequency domain resource includes K frequency domain units in frequency domain. The first information includes six pieces of communication group indication information (that is, N=6) corresponding to the first resource allocation information. Communication apparatuses in six communication groups may determine, based on the first resource allocation information, that the first resource includes six symbol groups, and each symbol group includes 6/6=1 symbol. The communication apparatuses in the six communication groups may determine, based on a ranking n of the communication group indication information, symbols included in communication resources of respective communication groups. A communication apparatus in the communication group 0 determines, based on that a ranking n of corresponding communication group indication information is 0, that a communication resource of the communication group 0 includes a symbol group 0, that is, the symbol 0. The communication resource of the communication group 0 includes the symbol 0 and the K frequency domain units in frequency domain. In addition, communication apparatuses in the communication group 1 and the communication group 2 to a communication group 5 may determine, based on values of rankings n of respective communication group indication information, that symbol groups included in communication resources of the communication groups are a symbol group 1 and a symbol group 2 (that is, the symbol 2) to a symbol group 5 respectively.

Optionally, the first communication apparatus determines the communication resource of the first communication group in the first resource based on a quantity N of communication groups corresponding to the first resource allocation information, a quantity L of time units included in the first resource, and a ranking n of the first communication group indication information in the N pieces of communication group indication information.

For example, if the first resource is L consecutive time units whose start time unit is the time unit $l$, L/N time units included in the communication resource of the first communication group are a time unit $l+(n-1)*L/N$ to a time unit $k+n*L/N-1$, where n is an integer greater than or equal to 1 and less than or equal to N. If the $1^{st}$ value of n is 0, that is, n is an integer greater than or equal to 0 and less than or equal to N-1, the L/N time units included in the communication resource of the first communication group are a time unit $l+n*L/N$ to a time unit $l+(n+1)*L/N-1$.

An example in which the time unit is the OFDM symbol is used. For example, as shown in FIG. 12, the first resource includes six symbols in total: a symbol 0 to a symbol 5 in time domain, that is, $l=0$ and L=6. For example, the frequency domain resource includes K frequency domain units in frequency domain. The first information includes six pieces of communication group indication information (that is, N=6) corresponding to the first resource allocation information. Communication apparatuses in six communication groups may determine, based on the first resource allocation information, that the first resource includes the six symbols, and a time domain resource of one communication group includes 6/6=1 symbol. The communication apparatuses in the six communication groups may determine, based on a ranking n of the communication group indication information, symbols included in communication resources of respective communication groups. For example, a communication apparatus in the communication group 0 determines, based on that a ranking n of corresponding communication group indication information is 0, that a communication resource of the communication group 0 includes the symbol 0 (that is, when n=0, *l*+n*L/N=0, and *l*+(n+1)*L/N-1=0). In addition, communication apparatuses in the communication group 1 and the communication group 2 to a communication group 5 may determine, based on values of rankings n of respective communication group indication information, that communication resources of the communication groups include the symbol 1 and the symbol 2 to the symbol 5 respectively.

It should be understood that this application is not limited thereto. The first resource may include L inconsecutive time units, and the communication resources of the N communication groups may be arranged in the first resource based on a reverse ranking of the communication group indication information or another arrangement relationship.

An example in which a quantity of resource units (the resource unit may be a frequency domain unit and/or a time unit) included in the first resource is an integer multiple of a quantity N of communication resource groups is used above for description. However, this application is not limited thereto. The quantity of resource units included in the first resource indicated by the first resource allocation information may not be the integer multiple of N.

Optionally, sizes of communication resources of communication apparatuses other than a communication apparatus in a first target communication group in the N communication groups are the same, and a size of a communication resource of the first target communication group is different from that of a communication resource of one communication group other than the first target communication group.

In an example, the communication resource of the first target communication group may be greater than that of the communication group other than the first target communication group in the N communication groups.

Optionally, the first target communication group is a preset communication group in the N communication groups. By way of example and not limitation, the first target communication group may be a communication group indicated by the 1st or last piece of communication group indication information in the N pieces of communication group indication information.

When the N communication groups perform frequency division multiplexing on the first resource in frequency domain, a quantity of frequency domain units included in the communication resource of the first target communication group is $K - (N-1) * \lfloor K/N \rfloor$, where $\lfloor \cdot \rfloor$ represents rounding down to the nearest integer. A communication resource of each of the N communication groups except the first target communication group includes $\lfloor K/N \rfloor$ frequency domain units.

For example, communication groups indicated by the N pieces of communication group indication information are the communication group 0, the communication group 1, ..., and the communication group N-1 sequentially. The first target communication group is the communication group 0 indicated by the 1st piece of communication group indication information in the N pieces of communication group indication information. For example, the N communication groups perform frequency division multiplexing on the first resource in frequency domain, and the resource unit is the frequency domain unit. In this case, the communication resource of the communication group 0 includes $K - (N-1) * \lfloor K/N \rfloor$ frequency domain units, and a communication resource of another communication group includes $\lfloor K/N \rfloor$ frequency domain units.

For example, the first resource is the K consecutive frequency domain units whose start frequency domain unit is the frequency domain unit k. In this case, frequency domain units included in the communication resources of the N communication groups are respectively as follows:

Frequency domain units included in the communication group 0 are the frequency domain unit k to a frequency domain unit $k + K - (N-1) * \lfloor K/N \rfloor - 1$; ...;

frequency domain units included in a communication group n are a frequency domain unit $k + K - (N-1) * \lfloor K/N \rfloor + (n-2) * \lfloor K/N \rfloor$ to a frequency domain unit k+K - (N - 1) *

$$\lfloor K/N \rfloor + (n-1) * \lfloor K/N \rfloor - 1$$ ; ...; and

frequency domain units included in the communication group N-1 are a frequency domain unit

$$k+K - (N-1) * \lfloor K/N \rfloor + (N-2) * \lfloor K/N \rfloor$$ to a frequency domain unit k+K - 1.

For example, the first target communication group is the communication group 0 indicated by the 1st piece of communication group indication information in the three pieces of communication group indication information. If the first resource includes 10 RBGs, the communication resource of the communication group 0 includes RBGs in the 1st RBG group, and a quantity of RBGs included in the 1st RBG group is $10 - (3-1) * \lfloor 10/3 \rfloor = 4$ RBGs, that is, the communication resource of the communication group 0 includes the first 4 RBGs in the 10 RBGs. The communication resource of the communication group 1 indicated by the 2nd piece of communication group indication information includes three RBGs in total: the 5th RBG to the 7th RBG in the 10 RBGs. The communication resource of the communication group 2 indicated by the 3rd piece of communication group indication information includes three RBGs in total: the 8th RBG to the 10th RBG in the 10 RBGs.

The first target communication group is the communication group N-1 indicated by the last piece of communication group indication information in the N pieces of communication group indication information. For example, the N communication groups perform frequency division multiplexing on the first resource in frequency domain, and the resource unit is the frequency domain unit. In this case, a communication resource of the communication group N-1 includes $K - (N-1) * \lfloor K/N \rfloor$ frequency domain units, and a communication resource of another communication group includes $\lfloor K/N \rfloor$ frequency domain units. For example, the first resource is the K consecutive frequency domain units whose start frequency domain unit is the frequency domain unit k. In this case, frequency domain units included in the communication resources of the N communication groups are respectively as follows:

Frequency domain units included in the communication group 0 are the frequency domain unit k to a frequency domain unit $K + \lfloor K/N \rfloor - 1$ ; ...;

frequency domain units included in a communication group n are a frequency domain unit $k+(n-1) * \lfloor K/N \rfloor$ to a frequency domain unit $k+n * \lfloor K/N \rfloor - 1$ ; ...; and

frequency domain units included in the communication group N-1 are a frequency domain unit

$$k+(N-1) * \lfloor K/N \rfloor$$ to a frequency domain unit k+K - 1.

When the N communication groups perform time division multiplexing on the first resource in time domain, a quantity of time units included in the communication resource of the first target communication group is

$$L - (N-1) * \lfloor L/N \rfloor$$ . A communication resource of each of the N communication groups except the first target communication group includes $\lfloor L/N \rfloor$ time units.

For example, communication groups indicated by the N pieces of communication group indication information are the communication group 0, the communication group 1, ..., and the communication group N-1 sequentially. The first target communication group is the communication group 0 indicated by the 1st piece of communication group indication information in the N pieces of communication group indication information. For example, the N communication groups perform time division multiplexing on the first resource in time domain, and the resource unit is the time unit. In this case, the communication resource of the communication group 0 includes $L - (N-1) * \lfloor L/N \rfloor$ time units, and a communication resource of another communication group includes $\lfloor L/N \rfloor$ time units.

For example, the first resource is the L consecutive time units whose start time unit is the time unit *l*. In this case, time units included in the communication resources of the N communication groups are respectively as follows:

Time units included in the communication group 0 are the time unit *l* to a time unit *l* +

$$L - (N - 1) * \lfloor L/N \rfloor - 1$$ ; ...;

time units included in a communication group n are a time unit $l$+L - (N - 1) * $\lfloor L/N \rfloor + (n - 2) * \lfloor L/N \rfloor$ to a time unit $l$+L $- (N - 1) * \lfloor L/N \rfloor + (n - 1) * \lfloor L/N \rfloor - 1$ ; ...; and

time units included in the communication group N-1 are a time unit $l$+L - (N - 1) * $\lfloor L/N \rfloor + (N - 2) * \lfloor L/N \rfloor$ to a time unit $l$+L - 1.

For example, the first target communication group is the communication group 0 indicated by the 1st piece of communication group indication information in the three pieces of communication group indication information. If the first resource includes 11 OFDM symbols, the communication resource of the communication group 0 includes symbols in the 1st symbol group, and a quantity of symbols included in the 1st symbol group is $11 - (3 - 1) * \lfloor 11/3 \rfloor = 5$ symbols, that is, the communication resource of the communication group 0 includes the first 5 symbols in the 11 symbols. The communication resource of the communication group 1 indicated by the 2nd piece of communication group indication information includes three symbols in total: the 6th symbol to the 8th symbol in the 11 symbols. The communication resource of the communication group 2 indicated by the 3rd piece of communication group indication information includes three symbols in total: the 9th symbol to the 11th symbol in the 11 symbols.

The first target communication group is the communication group N-1 indicated by the last piece of communication group indication information in the N pieces of communication group indication information. For example, the N communication groups perform frequency division multiplexing on the first resource in frequency domain, and the resource unit is the time unit. In this case, a communication resource of the communication group N-1 includes L - $(N - 1) * \lfloor L/N \rfloor$ time units, and a communication resource of another communication group includes $\lfloor L/N \rfloor$ time units. For example, the first resource is the L consecutive time units whose start time unit is the time unit $l$. In this case, time units included in the communication resources of the N communication groups are respectively as follows:

Time units included in the communication group 0 are the time unit $l$ to a time unit $L + \lfloor L/N \rfloor - 1$ ; ...;

time units included in a communication group n are a time unit $l$+$(n - 1) * \lfloor L/N \rfloor$ to a time unit $l$+$n * \lfloor L/N \rfloor - 1$ ; ...; and

time units included in the communication group N-1 are a time unit $l$+$(N - 1) * \lfloor L/N \rfloor$ to a time unit $l$+L - 1.

In another example, the communication resource of the first target communication group may be less than that of the communication group other than the first target communication group in the N communication groups.

When the N communication groups perform frequency division multiplexing on the first resource in frequency domain, a quantity of frequency domain units included in the communication resource of the first target communication group is $K - (N - 1) * \lceil K/N \rceil$. A communication resource of each of the N communication groups except the first target communication group includes $\lceil K/N \rceil$ frequency domain units.

For example, communication groups indicated by the N pieces of communication group indication information are the communication group 0, the communication group 1, ..., and the communication group N-1 sequentially. The first target communication group is the communication group 0 indicated by the 1st piece of communication group indication information in the N pieces of communication group indication information. For example, the N communication groups perform frequency division multiplexing on the first resource in frequency domain, and the resource unit is the frequency domain unit. In this case, the communication resource of the communication group 0 includes $K - (N - 1) * \lceil K/N \rceil$ frequency domain units, and a communication resource of another communication group includes $\lceil K/N \rceil$ frequency domain units. For example, the first resource is the K consecutive frequency domain units whose start frequency domain unit is the frequency domain unit k. In this case, frequency domain units included in the communication resources of the N communication groups are respectively as follows:

Frequency domain units included in the communication group 0 are the frequency domain unit k to a frequency domain unit $k+K-(N-1)*\lceil K/N\rceil-1$; ...;

frequency domain units included in a communication group n are a frequency domain unit $k+K-(N-1)*\lceil K/N\rceil+(n-2)*\lceil K/N\rceil$ to a frequency domain unit k+K - (N - 1) * $\lceil K/N\rceil+(n-1)*\lceil K/N\rceil-1$; ...; and

frequency domain units included in the communication group N-1 are a frequency domain unit $k+K-(N-1)*\lceil K/N\rceil+(N-2)*\lceil K/N\rceil$ to a frequency domain unit k+K - 1.

For example, the first target communication group is the communication group 0 indicated by the 1st piece of communication group indication information in four pieces of communication group indication information. An example in which the frequency domain unit is the RB is used. If the first resource includes 14 RBs, the communication resource of the communication group 0 includes RBs in the 1st RB group, and a quantity of RBs included in the 1st RB group is $14-(4-1)*\lceil 14/4\rceil=2$ RBs, that is, the communication resource of the communication group 0 includes the first 2 RBs in the 14 RBs. The communication resource of the communication group 1 indicated by the 2nd piece of communication group indication information includes four RBs in total: the 3rd RB to the 6th RB in the 14 RBs. The communication resource of the communication group 2 indicated by the 3rd piece of communication group indication information includes four RBs in total: the 7th RB to the 10th RB in the 14 RBs, and the last three RBs: the 11th RB to the 14th RB are a communication resource of a communication group 3.

The first target communication group is the communication group N-1 indicated by the last piece of communication group indication information in the N pieces of communication group indication information. For example, the N communication groups perform frequency division multiplexing on the first resource in frequency domain, and the resource unit is the frequency domain unit. In this case, the communication group N-1 includes $K-(N-1)*\lceil K/N\rceil$ frequency domain units, and a communication resource of another communication group includes $\lceil K/N\rceil$ frequency domain units. For example, the first resource is the K consecutive frequency domain units whose start frequency domain unit is the frequency domain unit *k*. In this case, frequency domain units included in the communication resources of the N communication groups are respectively as follows:

Frequency domain units included in the communication group 0 are the frequency domain unit *k* to a frequency domain unit $K+\lceil K/N\rceil-1$; ...;

frequency domain units included in a communication group n are a frequency domain unit $k+(n-1)*\lceil K/N\rceil$ to a frequency domain unit $k+n*\lceil K/N\rceil-1$; ...; and

frequency domain units included in the communication group N-1 are a frequency domain unit $k+(N-1)*\lceil K/N\rceil$ to a frequency domain unit k+K - 1.

When the N communication groups perform time division multiplexing on the first resource in time domain, a quantity of time units included in the communication resource of the first target communication group is $L-(N-1)*\lceil L/N\rceil$, where $\lceil\cdot\rceil$ represents rounding up to the nearest integer. A communication resource of each of the N communication groups except the first target communication group includes $\lceil L/N\rceil$ time units.

For example, communication groups indicated by the N pieces of communication group indication information are the communication group 0, the communication group 1, ..., and the communication group N-1 sequentially. The first target communication group is the communication group 0 indicated by the 1st piece of communication group indication information in the N pieces of communication group indication information. For example, the N communication groups perform time division multiplexing on the first resource in time domain, and the resource unit is the time unit. In this case, the communication resource of the communication group 0 includes $L - (N - 1) * \lceil L/N \rceil$ time units, and a communication resource of another communication group includes $\lceil L/N \rceil$ time units. For example, the first resource is the L consecutive time units whose start time unit is the time unit $l$. In this case, time units included in the communication resources of the N communication groups are respectively as follows:

Time units included in the communication group 0 are the time unit $l$ to a time unit $l+L-(N - 1) * \lceil L/N \rceil - 1$; ...;

time units included in a communication group n are a time unit $l+L - (N - 1) * \lceil L/N \rceil + (n - 2) * \lceil L/N \rceil$ to a time unit $l+L - (N - 1) * \lceil L/N \rceil + (n - 1) * \lceil L/N \rceil - 1$; ...; and

time units included in the communication group N-1 are a time unit $l+L-(N - 1) * \lceil L/N \rceil + (N - 2) * \lceil L/N \rceil$ to a time unit $l+L - 1$.

For example, the first target communication group is the communication group 0 indicated by the 1st piece of communication group indication information in four pieces of communication group indication information. If the first resource includes 11 OFDM symbols, the communication resource of the communication group 0 includes symbols in the 1st symbol group, and a quantity of symbols included in the 1st symbol group is $11-(4 - 1) * \lceil 11/4 \rceil = 2$ symbols, that is, the communication resource of the communication group 0 includes the first 2 symbols in the 11 symbols. The communication resource of the communication group 1 indicated by the 2nd piece of communication group indication information includes three symbols in total: the 3rd symbol to the 5th symbol in the 11 symbols. The communication resource of the communication group 2 indicated by the 3rd piece of communication group indication information includes three symbols in total: the 6th symbol to the 8th symbol in the 11 symbols, and the last three symbols are a communication resource of a communication group 3.

The first target communication group is the communication group N-1 indicated by the last piece of communication group indication information in the N pieces of communication group indication information. For example, the N communication groups perform time division multiplexing on the first resource in time domain, and the resource unit is the time unit. In this case, the communication group N-1 includes $L - (N - 1) * \lceil L/N \rceil$ time units, and a communication resource of another communication group includes $\lceil L/N \rceil$ time units. For example, the first resource is the L consecutive time units whose start time unit is the time unit $l$. In this case, time units included in the communication resources of the N communication groups are respectively as follows:

Time units included in the communication group 0 are the time unit $l$ to a time unit $L + \lceil L/N \rceil - 1$; ...;

time units included in a communication group n are a time unit $l+(n - 1) * \lceil L/N \rceil$ to a time unit $l+n * \lceil L/N \rceil - 1$; ...; and

time units included in the communication group N-1 are a time unit $l+(N - 1) * \lceil L/N \rceil$ to a time unit $l+L - 1$.

In another implementation, that there is an association relationship between the first communication group indication information and the communication resource of the first communication group includes: The first communication group indication information corresponds to the communication resource of the first communication group.

Optionally, the association relationship may be configured by the network device for the first communication apparatus by using signaling.

For example, there is an association relationship between identification information of a communication group indicated by communication group indication information and a communication resource of the communication group indicated by the communication group indication information. The association relationship may be at least one row shown in Table 1-1.

**Table 1-1**

| Identification information of the communication group | Communication resource |
| --- | --- |
| Communication group identifier 0 | Resource group $x_0$ |
| Communication group identifier 1 | Resource group $x_1$ |
| ... | ... |
| Communication group identifier P1-1 | Resource group $x_{P1-1}$ |

The resource group $x_0$ to the resource group $x_{P1-1}$ are determined based on the first resource. For example, the first resource includes P1 resource groups: the resource group $x_0$ to the resource group $x_{P1-1}$, where P1 is an integer.

Optionally, the first communication apparatus determines the communication resource of the first communication group based on a communication group identifier indicated by the first communication group identification information and an association relationship between the communication group identifier and the communication resource.

For example, there is an association relationship shown in Table 1-2 between the communication group identifier indicated by the first communication group indication information and the communication resource of the first communication group.

Table 1-2

| Identification information of the communication group | Communication resource |
| --- | --- |
| Communication group identifier 0 | Resource group 1 |
| Communication group identifier 1 | Resource group 3 |
| Communication group identifier 2 | Resource group 2 |
| Communication group identifier 3 | Resource group 4 |

If an identifier of the first communication group is the communication group identifier 1, a resource group that is of the first resource and that is included in the communication resource of the first communication group is the resource group 3 corresponding to the communication group identifier 1 shown in Table 1-2. The communication apparatus in the first communication group determines, based on the communication group identifier 1 indicated by the first communication group indication information included in the first information, that the first communication group is scheduled. The first communication apparatus may determine, based on the first resource allocation information, that the first resource includes four (that is, P1=4) resource groups in total: the resource group 1 to the resource group 4. The first communication apparatus determines, based on the association relationship shown in Table 1-2, that the communication resource of the first communication group is the resource group 3.

In still another implementation, that there is an association relationship between the first communication group indication information and the communication resource of the first communication group includes: The communication resource of the first communication group is related to a ranking of an information block of the first communication group in N information blocks or the ranking of the first communication group indication information in the N pieces of communication group indication information. The first communication apparatus determines the communication resource of the first communication group based on the ranking of the information block of the first communication group in the N information blocks. For a specific implementation, refer to the implementation performed by the first communication apparatus based on the ranking of the first communication group indication information in the N pieces of communication group indication information. For brevity, details are not described herein again.

The foregoing describes the specific implementation in which the first resource includes the communication resources of the N communication groups. The following provides descriptions in which the first resource is the communication resource of the second target communication group in the N communication groups. The N communication groups may determine the respective communication resources based on the first resource.

For example, when the first resource allocation information includes the frequency domain resource allocation information, that the first resource is the communication resource of the second target communication group in the N communication groups means that, in terms of frequency domain, the frequency domain resource of the first resource is a frequency domain resource of the communication resource of the second target communication group in the N communication groups.

For example, when the first resource allocation information includes the time domain resource allocation information, that the first resource is the communication resource of the second target communication group in the N communication groups means that, in terms of time domain, the time domain resource of the first resource is a time domain resource of the communication resource of the second target communication group in the N communication groups.

For example, when the first resource allocation information includes the frequency domain resource allocation information and the time domain resource allocation information, that the first resource is the communication resource of the second target communication group in the N communication groups means that, in terms of time-frequency domain, a time-frequency domain resource of the first resource is a time-frequency domain resource of the communication resource of the second target communication group in the N communication groups.

In an implementation, that there is an association relationship between the first communication group indication information and the communication resource of the first communication group includes: A position of the communication resource of the first communication group is related to a ranking of the first communication group indication information in the N pieces of communication group indication information. The first communication apparatus determines the communication resource of the first communication group based on the first resource and the ranking of the first communication group indication information in the N pieces of communication group indication information.

Optionally, the communication resources of the N communication groups have different frequency domain positions in the first resource, and/or the communication resources of the N communication groups have different time domain positions in the first resource.

For example, a multiplexing manner of the communication resources of the N communication groups in frequency domain may be predefined, preconfigured, or indicated by the first information as frequency division multiplexing.

For example, the communication resources of the N communication groups have a same size and different frequency domain positions.

For the time domain resource, for example, the time domain resources of the communication resources of the N communication groups are all the time domain resource of the first resource, that is, each include L time units in time domain. In addition, the communication resources of the N communication groups each include K frequency domain units.

Optionally, the first communication apparatus determines the communication resource of the first communication group based on the first resource and a ranking n of the first communication group indication information in the N pieces of communication group indication information. The communication resources of the N communication groups are sequentially arranged in frequency domain, and a ranking of communication group indication information of the second target communication group in the N pieces of communication group indication information is m. In this case, the first communication apparatus may determine the communication resource of the first communication group based on n, m, and the first resource.

If the first resource is K consecutive frequency domain units whose start frequency domain unit is a frequency domain unit k, frequency domain units included in the communication resource of the first communication group are a frequency domain unit k+(n-m)*K to a frequency domain unit k+(n-m+1)*K-1.

Optionally, it is assumed that the ranking starts from 0. When the ranking of the communication group indication information of the second target communication group in the N pieces of communication group indication information is m=0, the first communication apparatus may determine the communication resource of the first communication group based on the ranking n of the first communication group indication information in the N pieces of communication group indication information and the first resource.

If the first resource is K consecutive frequency domain units whose start frequency domain unit is a frequency domain unit k, frequency domain units included in the communication resource of the first communication group are a frequency domain unit k+n*K to a frequency domain unit k+(n+1)*K-1.

Optionally, it is assumed that the ranking starts from 1. When the ranking of the communication group indication information of the second target communication group in the N pieces of communication group indication information is m=1, the first communication apparatus may determine the communication resource of the first communication group based on the ranking n of the first communication group indication information in the N pieces of communication group indication information and the first resource.

If the first resource is K consecutive frequency domain units whose start frequency domain unit is a frequency domain unit k, frequency domain units included in the communication resource of the first communication group are a frequency domain unit k+(n-1)*K to a frequency domain unit k+n*K-1.

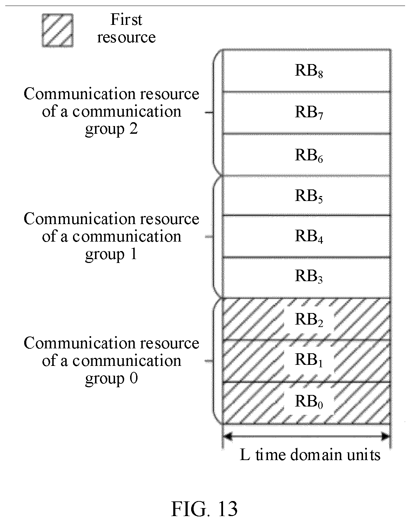

For example, the second target communication group is the communication group 0 indicated by the 1st piece of communication group indication information in the N pieces of communication group indication information, that is, m=1. As shown in FIG. 13, three (that is, N=3) pieces of communication group indication information indicate that the communication group 0, the communication group 1, and the communication group 2 are scheduled. The first resource allocation information indicates that the first resource includes three RBs in total: an RB 0 to an RB 3, that is, K=3. The first communication apparatus may determine a communication resource of the communication group 0 based on the first resource allocation information. If the first communication group indication information is the 2nd piece of communication group indication information in the N pieces of communication group indication information, that is, the first communication group is the communication group 1, the first communication apparatus determines, based on a ranking 1 (that is, m=1) of the communication group 0, a ranking (that is, n=2) of the communication group 1, and the first resource, that the communication resource of the first communication group includes the RB 3 to an RB 5. Alternatively, the ranking may start from 0. In this case, m=0, n=1, and the determined communication resource of the first communication group is the same as the foregoing, that is, includes the RB 3 to the RB 5. This is not limited in this application. If the first communication group indication information is the 3rd piece of communication group indication information in the N pieces of communication group indication information, that is, the first communication group is the communication group 2, the first communication apparatus determines, based on a ranking 1 (that is, m=1) of the communication group 0, a ranking (that is, n=3) of the communication group 2, and the first resource, that the communication resource of the first communication group includes an RB 6 to an RB 8.

For another example, the second target communication group is the communication group 1 indicated by the 2nd piece of communication group indication information in the N pieces of communication indication information, that is, m=2. Three (that is, N=3) pieces of communication group indication information in the first information indicate that the communication group 0, the communication group 1, and the communication group 2 are scheduled. The first resource allocation information indicates that the first resource includes three RBs in total: an RB 3 to an RB 5, that is, K=3. The first communication apparatus may determine the communication resource of the communication group 1 based on the first resource allocation information. If the first communication group indication information is the 1st piece of communication group indication information in the N pieces of communication group indication information, that is, the first communication group is the communication group 0, the first communication apparatus determines, based on a ranking 2 (that is, m=2) of the communication group 1, a ranking (that is, n=1) of the communication group 0, and the first resource, that identification information of the 1st RB included in the communication resource of the first communication group is $k+(n-m)*K=3+(1-2)*3=0$, and the first communication apparatus may determine that the communication resource of the first communication group includes three RBs in total: an RB 0 to an RB 2. If the first communication group indication information is the 3rd piece of communication group indication information in the N pieces of communication group indication information, that is, the first communication group is the communication group 2, the first communication apparatus determines, based on a ranking 2 (that is, m=2) of the communication group 1, a ranking (that is, n=3) of the communication group 2, and the first resource, that identification information of the 1st RB included in the communication resource of the first communication group is $k+(n-m)*K=3+(3-2)*3=6$, and the first communication apparatus may determine that the communication resource of the first communication group includes three RBs in total: an RB 6 to an RB 8.

Optionally, the first resource may include K inconsecutive frequency domain units. In this case, the communication resources of the N communication groups each include K frequency domain units, and a spacing between inconsecutive frequency domain units is the same as that between the inconsecutive frequency domain units in the first resource. The first communication group may determine the communication resource of the first communication group based on the first resource and according to a preset rule and the ranking of the first communication group indication information.

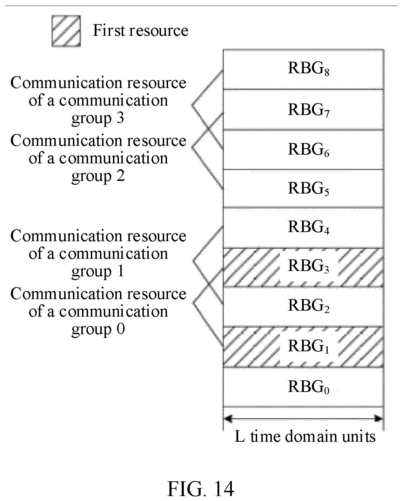

For example, as shown in FIG. 14, the first resource allocation information indicates that the first resource includes two inconsecutive RBGs: an RBG 1 and an RBG 3 in frequency domain, and the two RBGs are separated by one RBG. In this case, the communication resources of the communication apparatuses in the N communication groups each include two RBGs, the two RBGs are separated by one RBG, and time units included in time domain are L time units the same as those of the first resource. For example, it may be stipulated that the N communication apparatuses occupy consecutive frequency domain resources as much as possible. Based on the ranking of the communication group indication information, for example, N=4, the first resource is a communication resource of the 1st communication group, a communication resource of the 2nd communication group, that is, the communication group 1, needs to include two RBGs, and the two RBGs are separated by one RBG. In this case, the communication apparatus in the communication group 1 may determine, based on a frequency domain order, two RBGs that meet a requirement, that is, an RBG 2 and an RBG 4 are the communication resource of the communication group 1. A communication apparatus in the 3rd communication group, that is, the communication group 2, may determine, based on a frequency domain order, that the communication resource of the communication group 2 includes an RBG 5 and an RBG 7 that meet a requirement. In addition, a communication resource of a communication group 3 includes an RBG 6 and an RBG 8. However, this application is not limited thereto.

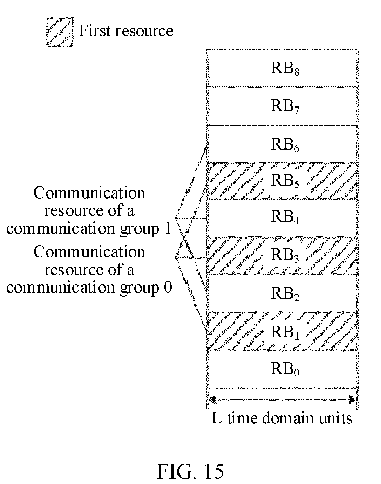

For another example, as shown in FIG. 15, the first resource allocation information indicates that the first resource includes three inconsecutive RBs: the RB 1, an RB 3, and an RB 5 in frequency domain, and every two adjacent RBs are separated by one RB. In this case, the communication resources of the communication apparatuses in the N communication groups each include three RBs, every two adjacent RBs are separated by one RB, and time units included in time domain are L time units the same as those of the first resource. For example, it may be stipulated that the N communication apparatuses occupy consecutive frequency domain resources as much as possible. Based on the ranking of the communication group indication information, for example, N=2, the first resource is a communication resource of the 1st communication group, a communication resource of the 2nd communication group, that is, the communication group 1, needs to include three RBs, and every two adjacent RBs are separated by one RB. In this case, the communication apparatus in the communication group 1 may determine, based on a frequency domain order, that three RBs that meet a requirement are an RB 2, an RB 4, and an RB 6, and are the communication resource of the communication group 1. However, this application is not limited thereto.

For example, a multiplexing manner of the communication resources of the N communication groups in time domain may be predefined, preconfigured, or indicated by the first information as time division multiplexing.

For example, the communication resources of the N communication groups have a same size and different time domain positions. For the frequency domain resource, for example, the frequency domain resources of the communication resources of the N communication groups are all the frequency domain resource of the first resource, that is, each include K frequency domain units in frequency domain.

Optionally, quantities of time units included in the time domain resources of the communication resources of the N communication groups are the same as that of time units included in the first resource, that is, L.

Optionally, the first communication apparatus determines the communication resource of the first communication group based on the first resource and a ranking n of the first communication group indication information in the N pieces of communication group indication information. The communication resources of the N communication groups are sequentially arranged in time domain, and a ranking of communication group indication information of the second target communication group in the N pieces of communication group indication information is m. In this case, the first communication apparatus may determine the communication resource of the first communication group based on n, m, and the first resource. If the first resource is L consecutive time units whose start time unit is the time unit $l$, time units included in the communication resource of the first communication group are a time unit $l+(n-m)*L$ to a time unit $l+(n-m+1)*L-1$.

Optionally, it is assumed that the ranking starts from 0. When the ranking of the communication group indication information of the second target communication group in the N pieces of communication group indication information is m=0, the first communication apparatus may determine the communication resource of the first communication group based on the ranking n of the first communication group indication information in the N pieces of communication group indication information and the first resource.

If the first resource is L consecutive time units whose start time domain unit is the time unit $l$, time units included in the communication resource of the first communication group are a time unit $l+n*L$ to a time unit $l+(n+1)*L-1$.

Optionally, it is assumed that the ranking starts from 1. When the ranking of the communication group indication information of the second target communication group in the N pieces of communication group indication information is m=1, the first communication apparatus may determine the communication resource of the first communication group based on the ranking n of the first communication group indication information in the N pieces of communication group indication information and the first resource.

If the first resource is L consecutive time units whose start time domain unit is the time unit $l$, time units included in the communication resource of the first communication group are a time unit $l+(n-1)*L$ to a time unit $l+n*L-1$.

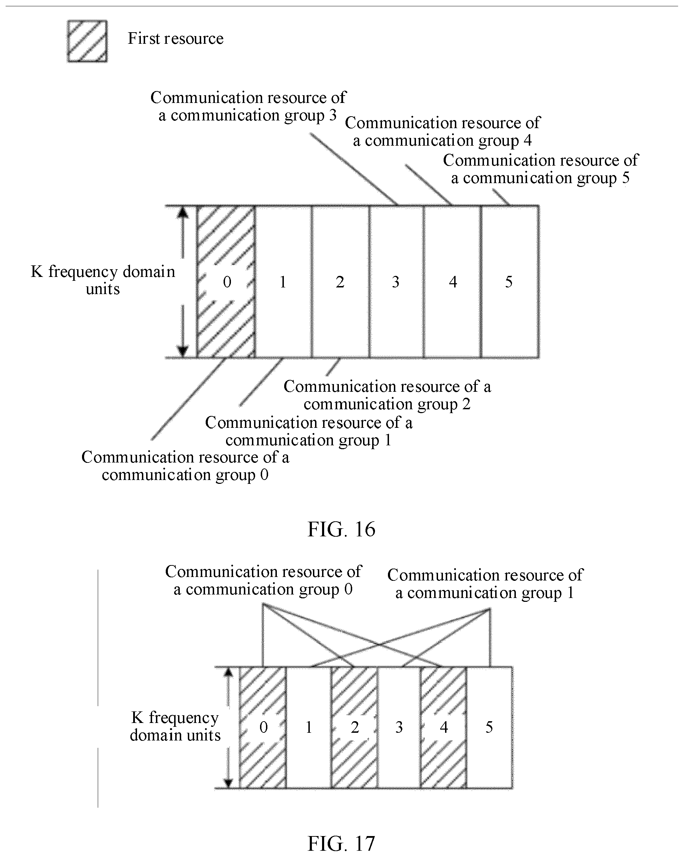

For example, the second target communication group is the communication group 0 indicated by the 1st piece of communication group indication information in the N pieces of communication group indication information, that is, m=1. As shown in FIG. 16, six (that is, N=6) pieces of communication group indication information indicate that the communication group 0, the communication group 1, the communication group 2, ..., and a communication group 5 are scheduled. The first resource allocation information indicates that the first resource includes a symbol 0, that is, $l=0$ and L=1. The first communication apparatus may determine a communication resource of the communication group 0 based on the first resource allocation information. If the first communication group indication information is the 2nd piece of communication group indication information in the six pieces of communication group indication information, that is, the first communication group is the communication group 1, the first communication apparatus determines, based on a ranking 1 (that is, m=1) of the communication group 0, a ranking (that is, n=2) of the communication group 1, and the first resource, that the communication resource of the first communication group includes the symbol 1. Alternatively, the ranking may start from 0. In this case, m=0, n=1, and the determined communication resource of the first communication group is the same as the foregoing, that is, includes the symbol 1. This is not limited in this application. If the first communication group indication information is the 3rd piece of communication group indication information in the six pieces of communication group indication information, that is, the first communication group is the communication group 2, the first communication apparatus determines, based on a ranking 1 (that is, m=1) of the communication group 0, a ranking (that is, n=3) of the communication group 2, and the first resource, that the communication resource of the first communication group includes the symbol 2. If the first communication group indication information is the 6th piece of communication group indication information in the six pieces of communication group indication information, that is, the first communication group is the communication group 5, the first communication apparatus determines, based on a ranking 1 (that is, m=1) of the communication group 0, a ranking (that is, n=6) of the communication group 5, and the first resource, that the communication resource of the first communication group includes a symbol 5. However, this application is not limited thereto.

Optionally, the first resource may include L inconsecutive time units. In this case, the communication resources of the N communication groups each include L time units, and a spacing between inconsecutive time units is the same as that between the inconsecutive time units in the first resource. The first communication group may determine the communication resource of the first communication group based on the first resource and according to a preset rule and the ranking of the first communication group indication information.

For example, as shown in FIG. 17, the first resource allocation information indicates that the first resource includes three inconsecutive OFDM symbols: a symbol 0, the symbol 2, and a symbol 4 in time domain, and every two adjacent symbols are separated by one symbol. In this case, the communication resources of the communication apparatuses in the N communication groups each include three symbols, every two adjacent symbols are separated by one symbol, and frequency domain units included in frequency domain are K frequency domain units the same as those of the first resource. For example, it may be stipulated that the N communication apparatuses occupy consecutive time domain resources as much as possible. Based on the ranking of the communication group indication information, for example, N=2, the first resource is a communication resource of the $1^{st}$ communication group, a communication resource of the $2^{nd}$ communication group, that is, the communication group 1, needs to include three symbols, and every two adjacent symbols are separated by one symbol. In this case, the communication apparatus in the communication group 1 may determine, based on a frequency domain order, that three symbols that meet a requirement are the symbol 1, a symbol 3, and a symbol 5, and are the communication resource of the communication group 1. However, this application is not limited thereto.

Optionally, sizes of communication resources of communication apparatuses other than a communication apparatus in a first target communication group in the N communication groups are the same, and a size of a communication resource of the first target communication group is different from that of a communication resource of one communication group other than the first target communication group.

For example, the communication resource (that is, the first resource) of the second target communication group includes the K consecutive frequency domain units whose start frequency domain unit is k, a maximum identifier of the frequency domain unit is q, and $K*(N-1)<q-k+1<K*N$. In other words, a quantity of frequency domain units included from the frequency domain unit k to the frequency domain unit q is insufficient to enable a communication resource of each of the N communication groups to include K frequency domain units. In this case, it may be stipulated that the size of the communication resource of the first target communication group in the N communication groups is different from that of a communication resource of another communication group.

For another example, the communication resource (that is, the first resource) of the second target communication group includes the L consecutive time units whose start time unit is $l$, a maximum identifier of the time unit in one resource allocation time interval (for example, the time unit is a symbol, and the resource allocation time interval is a frame, a subframe, or a slot, but this application is not limited thereto) is r, and $L*(N-1)<r-l+1<L*N$. In other words, a quantity of time units included from the time unit $l$ to the time unit $r$ is insufficient to enable a communication resource of each of the N communication groups to include L time units. In this case, it may be stipulated that the size of the communication resource of the first target communication group in the N communication groups is different from that of a communication resource of another communication group.

Optionally, the first target communication group is the last communication group in the N communication groups, and the communication resource of the first target communication group may be less than that of the communication group other than the first target communication group in the N communication groups.

For example, the time domain resource of the first resource is L time units, the frequency domain resource is the K consecutive frequency domain units whose start frequency domain unit is k, the time domain resources of the communication resources of the N communication groups are all the L time units, and the N communication groups determine the frequency domain resources of the respective communication resources based on the frequency domain resource of the first resource. For example, the maximum identifier of the frequency domain unit is q, $K*(N-1)<q-k+1<K*N$, and a quantity of frequency domain units included in the communication resource of the first target communication group is $(q - k + 1) - (N - 1) * K$. A communication resource of each of the N communication groups except the first target communication group includes K frequency domain units. Frequency domain units included in the communication resources of the N communication groups are respectively as follows:

Frequency domain units included in the communication group 0 are the frequency domain unit k to a frequency domain unit k+K-1; ...;

frequency domain units included in a communication group n are a frequency domain unit k+(n - 1) * K to a frequency domain unit k+n*K - 1; ...; and

frequency domain units included in the communication group N-1 are a frequency domain unit k+(N - 1) * K to the frequency domain unit $q$.

For another example, the frequency domain resource of the first resource is K frequency domain units, the time domain resource is the L consecutive time units whose start time unit is $l$, the frequency domain resources of the communication resources of the N communication groups are all the K frequency domain units, and the N communication groups determine the time domain resources of the respective communication resources based on the time domain resource of the first resource. For example, the maximum identifier of the time unit in the resource allocation time interval is $r$, L*(N-1)<r-l+1<L*N, and a quantity of time units included in the communication resource of the first target communication group is $(r - l + 1) - (N - 1) * L$. A communication resource of each of the N communication groups except the first target communication group includes L time units. Time units included in the communication resources of the N communication groups are respectively as follows:

Time units included in the communication group 0 are the time unit $l$ to a time unit $l$+L-1; ...;

time units included in a communication group n are a time unit $l$+(n - 1) * L to a time unit $l$+n*L - 1; ...; and time units included in the communication group N-1 are a time unit $l$+(N - 1) * L to the time unit $r$.

In another implementation, that there is an association relationship between the first communication group indication information and the communication resource of the first communication group includes: The first communication group indication information corresponds to the communication resource of the first communication group.

Optionally, the association relationship may be configured by the network device for the first communication apparatus by using signaling.

For example, there is an association relationship between a communication group identifier indicated by the first communication group indication information and the communication resource of the first communication group. The association relationship may be at least one row shown in Table 2.

**Table 2-1**

| Identification information of the communication group | Communication resource |
|---|---|
| Communication group identifier 0 | Resource group $y_0$ |
| Communication group identifier 1 | Resource group $y_1$ |
| ... | ... |
| Communication group identifier P2-1 | Resource group $y_{P2-1}$ |

The resource group y0 to the resource group $y_{P2-1}$ are determined based on the first resource. For example, the communication apparatus may deduce P2 resource groups: the resource group $y_0$ to the resource group $y_{P2-1}$ based on the first resource, where P2 is an integer.

Optionally, the first communication apparatus determines the communication resource of the first communication group based on the communication group identifier indicated by the first communication group identification information and the correspondence between the communication group identifier and the communication resource.

For example, there is an association relationship shown in Table 2-2 between the communication group identifier indicated by the first communication group indication information and the communication resource of the first communication group.

**Table 2-2**

| Identification information of the communication group | Communication resource |
|---|---|
| Communication group identifier 0 | Resource group 2 |
| Communication group identifier 1 | Resource group 4 |
| Communication group identifier 2 | Resource group 1 |
| Communication group identifier 3 | Resource group 3 |

As shown in Table 2-2, P2=4. The four resource groups are sequentially arranged and include a same quantity of resource units. The first resource indicated by the first resource allocation information is a resource group of the communication group 0, that is, the resource group 2 corresponding to the communication group identifier 0 shown in Table 2-1. One of the N pieces of communication group indication information indicates the communication group identifier 1, that is, an identifier of the communication group 1. After receiving the first information, the communication apparatus in the communication group 1 may determine, based on the first resource allocation information, that the first resource is the resource group 2 of the communication group 0, and then determine, based on that the resource group 1 to the resource group 4 are sequentially arranged and include the same quantity of resource units, that the resource group 4 corresponding to the communication group identifier 1 is the communication resource of the communication group 1. In this way, the communication apparatus may determine, based on the communication group identifier, the first resource, and the preconfigured association relationship, the communication resource of the communication group to which the communication apparatus belongs.

In still another implementation, that there is an association relationship between the first communication group indication information and the communication resource of the first communication group includes: The communication resource of the first communication group is related to a ranking of an information block of the first communication group in N information blocks or the ranking of the first communication group indication information in the N pieces of communication group indication information. The first communication apparatus determines the communication resource of the first communication group based on the ranking of the information block of the first communication group in the N information blocks. For a specific implementation, refer to the implementation performed by the first communication apparatus based on the ranking of the first communication group indication information in the N pieces of communication group indication information. For brevity, details are not described herein again.

The time-frequency resource may include some unavailable resources of one or more of the N communication groups. The unavailable resources of the one or more communication groups are not used for communication of the one or more communication groups. The unavailable resource may be a resource pre-allocated for another purpose. For example, the unavailable resource may include a resource occupied by a conventional communication system (for example, a communication apparatus in an NR system cannot use a resource occupied by a CRS, a synchronization signal, or the like of an LTE system), to ensure compatibility between communication systems. The unavailable resource may be a reserved resource, for example, a reserved resource used for transmission of another signal, or a resource reserved for another reason or a conflict resource, for example, a reserved CSI-RS resource, a reserved synchronization signal resource, or a reserved transmission resource of a special service. The unavailable resource may include a periodic resource, a semi-persistent resource, or the like that has been allocated to another communication apparatus. However, this application is not limited thereto.

The time-frequency resource may include a common unavailable resource of the N communication groups, denoted as a first non-candidate resource. The first non-candidate resource is a resource that is not used for communication of any one of the N communication groups. The first non-candidate resource may also be referred to as the common unavailable resource of the N communication groups. The time-frequency resource may include an unavailable resource of a part of the N communication groups, which may be referred to as a non-common unavailable resource of the N communication groups. For example, a second non-candidate resource is an unavailable resource of the first communication group, and the second non-candidate resource is a resource that is not used for communication of the first communication group. When the communication apparatus determines the communication resource based on the first resource, there may be an unavailable resource in the time-frequency resource. In this case, communication apparatuses need to reach a consensus on a manner of determining the communication resource when the time-frequency resource includes the unavailable resource, so that communication apparatuses that perform communication on the communication resource determine a same communication resource, to reduce a probability that communication reliability is reduced due to inconsistent determined resources. In an example, in the foregoing implementation, the first communication apparatus determines the communication resource of the first communication group without considering the unavailable resource. After determining the communication resource of the first communication group, the first communication apparatus determines, from the communication resource of the first communication group based on the unavailable resource of the first communication group, a resource that can be used for communication, to perform communication on the resource that can be used for the communication.

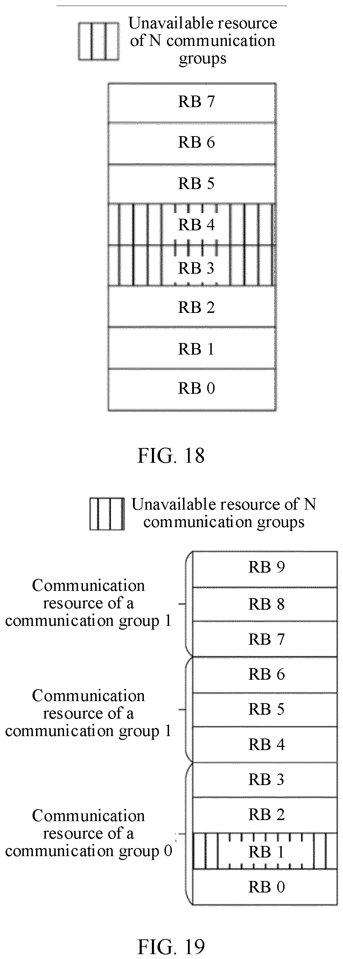

As shown in FIG. 18, an example in which the frequency domain unit is the RB is used. The first resource allocation information indicates that the first resource is eight consecutive RBs: the RB 0 to the RB 7. After receiving the first information, the first communication apparatus determines the first resource based on the first resource allocation information. The first resource includes the eight RBs. If N is 3, the first communication apparatus may determine that communication resources of three communication groups respectively include two RBs, three RBs, and three RBs. A ranking of the first communication group indication information in three pieces of communication group indication information is 2, that is, the first communication group is the communication group 1. The first communication apparatus may determine that the communication resource of the first communication group includes the RB 2 to the RB 4. The first communication apparatus may determine, based on preconfigured information, that the RB 3 and the RB 4 in the first resource are unavailable resources of the first communication group. The communication resource of the first communication group obtained by the first communication apparatus by excluding the RB 3 and the RB 4 from the communication resource of the first communication group is the RB 2. Similarly, the communication apparatus in the communication group 0 may determine that the communication resource of the communication group 0 includes the RB 0 and the RB 1, and the communication apparatus in the communication group 2 may determine that the communication resource of the communication group 2 includes the RB 5, the RB 6, and the RB 7.

In another example, the first communication apparatus determines the communication resource of the first communication group in a resource other than the first non-candidate resource based on the first resource.

Optionally, the first non-candidate resource may be configured by using common signaling (or information), for example, cell common signaling or group common signaling.

For example, the first resource includes the communication resources of the N communication groups. After determining the first resource, the first communication apparatus excludes the first non-candidate resource from the first resource to obtain candidate resources of the N communication groups. Then, the first communication apparatus determines the communication resource of the first communication apparatus in the candidate resources based on the foregoing association relationship between the communication resource of the first communication group and the first communication group indication information.

As shown in FIG. 18, an example in which the frequency domain unit is the RB is used. The first resource allocation information indicates that the first resource is eight consecutive RBs: the RB 0 to the RB 7. After receiving the first information, the first communication apparatus determines the first resource based on the first resource allocation information, and the first communication apparatus may determine, based on preconfigured information, that the RB 3 and the RB 4 in the first resource are unavailable resources of the N communication groups, that is, the first non-candidate resource. The candidate resources of the N communication groups obtained by the first communication apparatus by excluding the RB 3 and the RB 4 from the first resource are six RBs in total: the RB 0 to the RB 2 and the RB 5 to the RB 7. If N is 3, the first communication apparatus may determine that a communication resource of each communication group includes two RBs. A ranking of the first communication group indication information in three pieces of communication group indication information is 2, that is, the first communication group is the communication group 1. The first communication apparatus may determine that the communication resource of the first communication group includes the RB 2 and the RB 5. Similarly, after excluding the first non-candidate resource from the first resource, the communication apparatus in the communication group 0 may determine that the communication resource of the communication group 0 includes the RB 0 and the RB 1, and after excluding the first non-candidate resource from the first resource, the communication apparatus in the communication group 2 may determine that the communication resource of the communication group 2 includes the RB 6 and the RB 7.

For another example, the first resource is the communication resource of the second target communication group. After determining the first resource, the first communication apparatus determines a quantity of resource units included in a resource other than the first non-candidate resource in the first resource, and the quantity of resource units is a quantity of resource units included in the communication resource of each communication group. The first communication apparatus determines the communication resource of the first communication group based on the quantity of resource units and the foregoing association relationship between the communication resource of the first communication group and the first communication group indication information.

As shown in FIG. 19, an example in which the second target communication group is the communication group 0, and the frequency domain unit is the RB is used. The first resource allocation information indicates that the first resource is four consecutive RBs: the RB 0 to the RB 3. After receiving the first information, the first communication apparatus determines the first resource based on the first resource allocation information, and the first communication apparatus may determine, based on preconfigured information, that the RB 1 in the first resource is an unavailable resource of the N communication groups, that is, the first non-candidate resource. After excluding the RB 1 from the first resource, the first communication apparatus determines that the communication resource of the communication group 0 is three RBs in total: the RB 0, the RB 2, and the RB 3. In this case, the first communication apparatus may determine that the communication resource of each of the N communication groups includes three RBs. If N is 3, and a ranking of the first communication group indication information in three pieces of communication group indication information is 2, that is, the first communication group is the communication group 1, the first communication apparatus may determine that the communication resource of the first communication group includes three RBs, and determine, based on a ranking n=1, that the three RBs are the RB 4, the RB 5, and the RB 6. Similarly, after excluding the first non-candidate resource from the first resource, the communication apparatus in the communication group 2 determines that the communication resource of each communication group includes three RBs, and then may determine, based on a ranking 2, that the communication resource of the communication group 2 includes three RBs: the RB7, the RB8, and the RB9.

Optionally, the communication resource of the first communication group includes the second non-candidate resource, the second non-candidate resource is the resource that is not used for the communication of the first communication group, and the first communication apparatus performs communication on a resource other than the second non-candidate resource in the communication resource of the first communication group.

Optionally, the second non-candidate resource may be configured by using dedicated signaling (or information), for example, signaling of the first communication apparatus or signaling of the first communication group.

Different from that the first non-candidate resource is the common unavailable resource of the N communication groups, the second non-candidate resource is the unavailable resource of the first communication group. In other words, there may be one communication group, and the second non-candidate resource is an available resource for the communication group other than the first communication group in the N communication groups. After the first communication apparatus determines the communication resource of the first communication group based on the first non-candidate resource, the communication resource of the first communication group may further include the second non-candidate resource. Therefore, the first communication apparatus excludes the second non-candidate resource from the communication resource of the first communication group to determine a resource that can be used for communication, that is, the resource used for the communication does not include the second non-candidate resource.

For example, in the example shown in FIG. 18, after excluding the first non-candidate resource from the first resource, the first communication apparatus determines that the communication resource of the first communication group includes the RB 2 and the RB 5, and the first communication apparatus may determine, based on the preconfigured information, that the RB 2 is an unavailable resource of the first communication group, that is, the second non-candidate resource. In this case, the first communication apparatus may determine that the first communication group can perform communication only on the RB 5.

Optionally, the non-candidate resource (including the first non-candidate resource and/or the second non-candidate resource) may be indicated by the network device to the first communication apparatus. For example, the network device may indicate the non-candidate resource to the first communication apparatus by using one or more of a (radio resource control, RRC) message, a medium access control (medium access control, MAC) control element (control element, CE), or physical layer signaling.

For example, indication information used by the network device to indicate the non-candidate resource to the communication apparatus may be referred to as data unmappable resource indication information, rate matching indication information, or reserved resource indication information. This is not limited in this application.

The foregoing describes a manner in which the first information includes the N pieces of communication group indication information and the first resource allocation information, and the first resource allocation information is used by the communication apparatuses in the N communication groups to determine the communication resources of the respective communication groups.

Optionally, the first information further includes M pieces of communication group indication information and second resource allocation information, M is a positive integer, M+N is less than or equal to Q, the M pieces of communication group indication information indicate M scheduled communication groups, the second resource allocation information indicates a second resource, and the second resource includes communication resources of the M communication groups, or the second resource is a communication resource of one of the M communication groups.

Optionally, there is a correspondence between the communication group indication information and the resource allocation information in the first information.

The correspondence between the communication group indication information and the resource allocation information in the first information may be predefined, preconfigured, or indicated by the first information. For example, in the correspondence, the N pieces of communication group indication information correspond to the first resource allocation information, and the M pieces of communication group indication information correspond to the second resource allocation information. This is not limited in this application.

For example, the first information further includes an information block corresponding to each communication group, the information block corresponding to each communication group includes indication information, the indication information indicates one piece of resource allocation information corresponding to a corresponding communication group, and the communication group determines, based on the indication information in a corresponding information block, the resource allocation information used to determine a communication resource.

For example, the first information includes two pieces of resource allocation information, and the information block corresponding to the communication group in the first information may include 1-bit indication information. If the 1 bit indicates "0", it indicates that the communication group determines the communication resource based on the 1st piece of resource allocation information in the first information, or if the 1 bit indicates "1", it indicates that the communication group determines the communication resource based on the 2nd piece of resource allocation information in the first information, or vice versa. For example, the Q communication groups scheduled by using the first information include the communication group 1, the communication group 2, and the communication group 3. After receiving the first information, the communication apparatus in the communication group 1 reads an information block 1 corresponding to the communication group 1. If indication information in the information block 1 indicates "1", the communication apparatus in the communication group 1 may determine to determine the communication resource of the communication group 1 based on the 2nd piece of resource allocation information. After receiving the first information, the communication apparatus in the communication group 2 reads an information block 2 corresponding to the communication group 2. If indication information in the information block 2 indicates "0", the communication apparatus in the communication group 2 may determine to determine the communication resource of the communication group 2 based on the 1st piece of resource allocation information. In addition, if indication information in an information block 3 of the communication group 3 indicates "1", the communication apparatus in the communication group 3 determines to determine the communication resource of the communication group 2 based on the 1st piece of resource allocation information. However, this application is not limited thereto.

For another example, the first information further includes an information block corresponding to each communication group, the information block corresponding to each communication group includes identification information of a communication group set, the identification information of the communication group set indicates one communication group set corresponding to a corresponding communication group, and the communication group determines, based on the identification information of the communication group set in a corresponding information block, resource allocation information used to determine a communication resource.

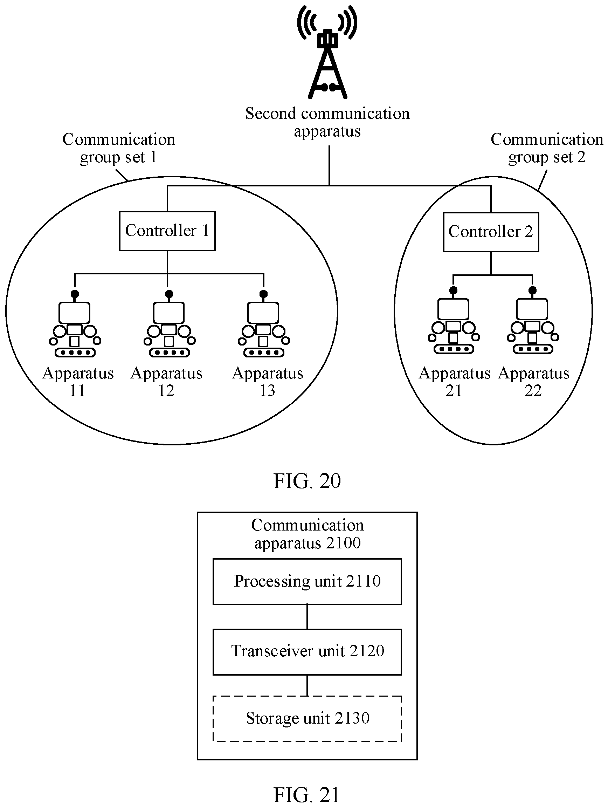

For example, as shown in FIG. 20, the second communication apparatus schedules a communication group set 1 and a communication group set 2 by using the first information. The communication group set 1 includes three communication groups: a communication group 11 including a controller 1 and an apparatus 11, a communication group 12 including the controller 1 and an apparatus 12, and a communication group 13 including the controller 1 and an apparatus 13. The communication group set 2 includes two communication groups: a communication group 21 including a controller 2 and an apparatus 21, and a communication group 22 including the controller 2 and an apparatus 22. The second communication apparatus sends the first information, and the first information may be received by communication apparatuses in the communication group set 1 and the communication group set 2. The first information includes two pieces of resource allocation information, and the information block corresponding to the communication group in the first information may include 1-bit identification information of a communication group set. If the 1 bit indicates "0", it indicates that the communication group belongs to the 1st communication group set and determines the communication resource based on the 1st piece of resource allocation information in the first information. For example, if 1 bit in an information block corresponding to each of the communication group 11, the communication group 12, and the communication group 13 indicates "0", communication devices in the three communication groups determine the communication resource based on the 1st piece of resource allocation information. If the 1 bit indicates "1", it indicates that the communication group belongs to the 2nd communication group set and determines the communication resource based on the 2nd piece of resource allocation information in the first information. For example, if 1 bit in an information block corresponding to each of the communication group 21 and the communication group 22 indicates "0", communication devices in the two communication groups determine the communication resource based on the 2nd piece of resource allocation information. However, this application is not limited thereto.

The communication apparatus may determine a quantity of sets of S communication groups based on a quantity of pieces of resource allocation information included in the first information. For example, if the first information includes two pieces of resource allocation information, the communication apparatus may determine that the S communication groups include two communication group sets. A resource indicated by the 1st piece of resource allocation information is used by the 1st communication group set (that is, a communication group set 0) to determine a communication resource, and a resource indicated by the 2nd piece of resource allocation information is used by the 2nd communication group set (that is, the communication group set 1) to determine a communication resource. In this case, the S communication groups determine, based on indication information in information blocks, whether the communication groups belong to the communication group set 0 or the communication group set 1, to determine corresponding resource allocation information.

Optionally, the communication apparatus may determine a quantity of communication group sets and/or the quantity of pieces of resource allocation information based on configuration information. For example, the network device sends signaling to indicate the quantity of communication group sets or the quantity of pieces of resource allocation information.

For another example, the communication apparatus may determine the corresponding resource allocation information according to a preset rule. For example, the communication apparatus may determine the corresponding resource allocation information according to an equal allocation rule. If the first information includes two pieces of resource allocation information, the communication apparatus may determine that communication groups indicated by the first S/2 pieces of communication group indication information in the first information determine a communication resource based on the first resource allocation information. In addition, communication groups indicated by the last S/2 pieces of communication group indication information in the first information determine a communication resource based on the first resource allocation information. Optionally, when S cannot be divided by a quantity of pieces of communication group resource allocation information, a manner of rounding up or down to the nearest integer may be used.

For example, there are seven communication groups, and the first information includes three pieces of resource allocation information. In this case, the communication apparatus may determine that three communication group sets are included. In an example, the communication apparatus may determine that each communication group set includes

$\lceil 7/3 \rceil =$ 3 communication groups . For example, the 1st communication group set and the 2nd communication group

set each may include three communication groups, and the 3rd communication group set may include one communication group; or the 1st communication group set may include one communication group, and the 2nd communication group set and the 3rd communication group set each may include three communication groups. In another example, the communication apparatus may determine that each communication group set includes $\lfloor 7/3 \rfloor = 2$ communication groups. For example, the 1st communication group set and the 2nd communication group set each may include two communication groups, and the 3rd communication group set may include four communication groups; or the 1st communication group set may include four communication groups, and the 2nd communication group set and the 3rd communication group set each may include two communication groups. However, this application is not limited thereto.

S503: The first communication apparatus performs communication on the communication resource of the first communication group.

After receiving the first information and determining the communication resource of the first communication group, the first communication apparatus communicates with the communication apparatus in the first communication group on the communication resource of the first communication group. For example, the first communication apparatus may be the sending communication apparatus. In this case, the first communication apparatus sends a signal (for example, one or more of control information, a reference signal, or data) on the communication resource. Alternatively, the first communication apparatus may be the receiving communication apparatus. In this case, the first communication apparatus receives a signal on the communication resource.

Optionally, when a proportion of the second non-candidate resource in the communication resource of the first communication group is less than or equal to (or less than) a resource threshold, the first communication apparatus performs communication on the resource other than the second non-candidate resource in the communication resource of the first communication group. When a proportion of the second non-candidate resource in the communication resource of the first communication group is greater than (or greater than or equal to) a resource threshold, the communication apparatus in the first communication group does not perform communication on the communication resource of the first communication group. A value of the resource threshold is a real number, for example, 0.1, 0.2, 0.3, 1/3, or 1/4. However, this application is not limited thereto.

The resource threshold may be predefined in a protocol, or may be configured by the network device by using signaling. This is not limited in this application.

When a proportion of the unavailable resource in the communication resource of the first communication group is greater than the resource threshold, a code rate is high after rate matching. This causes low communication reliability and a low probability of correct transmission. Therefore, the first communication apparatus may not perform communication on the communication resource when the proportion of the unavailable resource in the communication resource is greater than the resource threshold, to reduce a resource waste.

According to the solutions provided in this application, the second communication apparatus may schedule, by using the first information, the plurality of communication groups to perform communication. The first information includes common indication information, which may be used by communication apparatuses in the plurality of communication groups to determine scheduling parameters. This can improve resource utilization, and reduce scheduling and transmission latencies.

The foregoing describes in detail the method provided in this application. The following describes, with reference to the accompanying drawings, the communication apparatuses and the communication devices provided in this application. To implement functions in the method provided in this application, network elements may include a hardware structure and/or a software module, and the foregoing functions are implemented in a form of the hardware structure, the software module, or a combination of the hardware structure and the software module. Whether a specific function in the foregoing functions is performed by the hardware structure, the software module, or the combination of the hardware structure and the software module depends on a particular application and a design constraint condition of the technical solutions.

FIG. 21 is a block diagram of a communication apparatus according to this application. As shown in FIG. 21, the communication apparatus 2100 may include a transceiver unit 2120.

In a possible design, the communication apparatus 2100 may correspond to the first communication apparatus in the foregoing method. When the communication apparatus 2100 corresponds to the first communication apparatus, the communication apparatus 2100 may be a communication device, or the communication apparatus 2100 is a chip configured in (or used for) the communication device (for example, a terminal device), or another apparatus, module, circuit, unit, or the like that can implement the method of the first communication apparatus.

It should be understood that the communication apparatus 2100 may include a unit configured to perform the method performed by the first communication apparatus in the foregoing method embodiment. In addition, units in the communication apparatus 2100 and the foregoing other operations and/or functions are respectively used to implement corresponding procedures in the foregoing method embodiment.

Optionally, the communication apparatus 2100 may further include a processing unit 2110. The processing unit 2110 may be configured to process instructions or data, to implement a corresponding operation.

It should be further understood that when the communication apparatus 2100 is a chip configured in (or used for) the first communication apparatus, the transceiver unit 2120 in the communication apparatus 2100 may be an input/output interface or a circuit in the chip, and the processing unit 2110 in the communication apparatus 2100 may be a processor in the chip.

Optionally, the communication apparatus 2100 may further include a storage unit 2130. The storage unit 2130 may be configured to store the instructions or the data. The processing unit 2110 may execute the instructions or the data stored in the storage unit, to enable the communication apparatus to implement the corresponding operation.

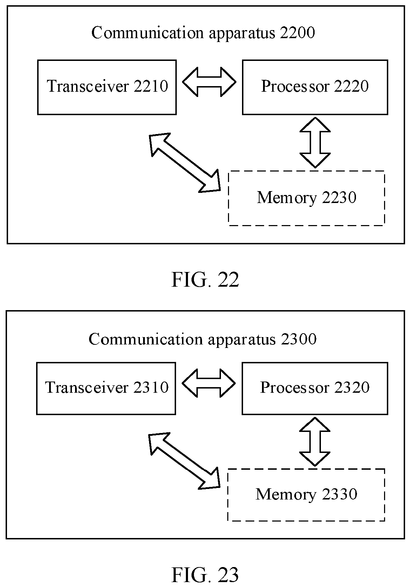

It should be understood that the transceiver unit 2120 in the communication apparatus 2100 may be implemented by a communication interface (for example, a transceiver, a transceiver circuit, an input/output interface, or a pin), for example, may correspond to a transceiver 2210 in a communication apparatus 2200 shown in FIG. 22. The processing unit 2110 in the communication apparatus 2100 may be implemented by at least one processor, for example, may correspond to a processor 2220 in the communication apparatus 2200 shown in FIG. 22. The processing unit 2110 in the communication apparatus 2100 may alternatively be implemented by at least one logic circuit. The storage unit 2130 in the communication apparatus 2100 may correspond to a memory 2230 in the first communication apparatus 2200 shown in FIG. 22.

It should be further understood that a specific process in which the units perform the foregoing corresponding steps is described in detail in the foregoing method. For brevity, details are not described herein again.

In another possible design, the communication apparatus 2100 may correspond to the second communication apparatus in the foregoing method. When the communication apparatus 2100 corresponds to the second communication apparatus, the communication apparatus 2100 may be a communication device, or the communication apparatus 2100 is a chip configured in (or used for) the communication device (for example, an access network device or a terminal device), or another apparatus, module, circuit, unit, or the like that can implement the method of the second communication apparatus.

It should be understood that the communication apparatus 2100 may include a unit configured to perform the method performed by the second communication apparatus in the foregoing method embodiment. In addition, units in the communication apparatus 2100 and the foregoing other operations and/or functions are respectively used to implement corresponding procedures in the foregoing method embodiment.

Optionally, the communication apparatus 2100 may further include a processing unit 2110. The processing unit 2110 may be configured to process instructions or data, to implement a corresponding operation.

It should be further understood that when the communication apparatus 2100 is a chip configured in (or used for) the second communication apparatus, the transceiver unit 2120 in the communication apparatus 2100 may be an input/output interface or a circuit in the chip, and the processing unit 2110 in the communication apparatus 2100 may be a processor in the chip.

Optionally, the communication apparatus 2100 may further include a storage unit 2130. The storage unit 2130 may be configured to store the instructions or the data. The processing unit 2110 may execute the instructions or the data stored in the storage unit, to enable the communication apparatus to implement the corresponding operation.

It should be understood that when the communication apparatus 2100 is the second communication apparatus, the transceiver unit 2120 in the communication apparatus 2100 may be implemented by a communication interface (for example, a transceiver, a transceiver circuit, an input/output interface, or a pin), for example, may correspond to a transceiver 2310 in a communication apparatus 2300 shown in FIG. 23. The processing unit 2310 in the communication apparatus 2300 may be implemented by at least one processor, for example, may correspond to a processor 2320 in the communication apparatus 2300 shown in FIG. 23. The processing unit 2110 in the communication apparatus 2100 may be implemented by at least one logic circuit. The storage unit 2130 in the communication apparatus 2100 may correspond to a memory 2330 in the network device 2300 shown in FIG. 23.

It should be further understood that a specific process in which the units perform the foregoing corresponding steps is described in detail in the foregoing method. For brevity, details are not described herein again.

FIG. 22 is a diagram of a structure of a communication apparatus 2200 according to this application. The communication apparatus 2200 may be used in the system shown in FIG. 1, to perform a function of the first communication apparatus in the foregoing method.

As shown in FIG. 22, the communication apparatus 2200 includes a processor 2220 and a transceiver 2210. Optionally, the communication apparatus 2200 further includes a memory 2230. The processor 2220, the transceiver 2210, and the memory may communicate with each other through an internal connection path, to transfer a control signal and/or a data signal. The memory 2230 is configured to store a computer program. The processor 2220 is configured to execute the computer program in the memory 2230, to control the transceiver 2210 to receive and send a signal.

The processor 2220 may be configured to perform an action that is internally implemented by the first communication apparatus and that is described in the foregoing method, and the transceiver 2210 may be configured to perform a sending or receiving action of the first communication apparatus described in the foregoing method. For details, refer to the descriptions in the foregoing method. Details are not described herein again.

Optionally, the communication apparatus 2200 may further include a power supply, configured to supply power to various devices or circuits in the communication apparatus.

FIG. 23 is a diagram of a structure of a communication apparatus 2300 according to this application. The communication apparatus 2300 may be used in the system shown in FIG. 1, to perform a function of the second communication apparatus in the foregoing method.

As shown in FIG. 23, the communication apparatus 2300 includes a processor 2320 and a transceiver 2310. Optionally, the communication apparatus 2300 further includes a memory 2330. The processor 2320, the transceiver 2310, and the memory may communicate with each other through an internal connection path, to transfer a control signal and/or a data signal. The memory 2330 is configured to store a computer program. The processor 2320 is configured to execute the computer program in the memory 2330, to control the transceiver 2310 to receive and send a signal.

The processor 2320 may be configured to perform an action that is internally implemented by the second communication apparatus and that is described in the foregoing method, and the transceiver 2310 may be configured to perform a sending or receiving action of the second communication apparatus described in the foregoing method. For details, refer to the descriptions in the foregoing method. Details are not described herein again.

Optionally, the communication apparatus 2300 may further include a power supply, configured to supply power to various devices or circuits in the communication apparatus.

In the communication apparatuses shown in FIG. 22 and FIG. 23, the processor and the memory may be combined into one processing apparatus, and the processor is configured to execute program code stored in the memory to implement the foregoing functions. In specific implementation, the memory may alternatively be integrated into the processor, or independent of the processor. The processor may correspond to the processing unit in FIG. 21. The transceiver 2210 may correspond to the transceiver unit in FIG. 21. The transceiver 2210 may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logic block diagrams in this application. The general-purpose processor may be a microprocessor, any conventional processor, or the like. The steps of the method with reference to this application may be directly implemented by a hardware processor, or may be implemented by a combination of hardware and a software module in the processor.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method provided in the foregoing method embodiment.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

According to the method provided in this application, this application further provides a computer program product. The computer program product includes computer program code. When the computer program code is executed by one or more processors, an apparatus including the processor is enabled to perform the method provided in the foregoing method embodiment.

All or some of the technical solutions provided in this application may be implemented by using software, hardware, firmware, or any combination thereof. When the software is used to implement the technical solutions, all or some of the technical solutions may be implemented in a form of a computer program product. The computer program product includes one or more computer instructions. When the computer program instructions are loaded and executed on a computer, all or some of the procedures or functions in this application are generated. The computer instructions may be stored in a computer-readable storage medium, or transmitted from a computer-readable storage medium to another computer-readable storage medium. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the method provided in this application, this application further provides a computer-readable storage medium. The computer-readable storage medium stores program code. When the program code is run by one or more processors, an apparatus including the processor is enabled to perform the method provided in the foregoing method embodiment.

According to the method provided in this application, this application further provides a system. The system includes the foregoing one or more first communication apparatuses. The system may further include the foregoing one or more second communication apparatuses.

In several embodiments provided in this application, it should be understood that the disclosed system, apparatus, and method may be implemented in another manner. For example, the foregoing described apparatuses are merely examples. For example, division into the units is merely logic function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource determining method, comprising:

   receiving, by a first communication apparatus, first information, wherein the first information is used to schedule communication of Q communication groups, Q is an integer greater than 1, one communication group comprises a sending communication apparatus and a receiving communication apparatus, the first information comprises N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups;
   determining, by the first communication apparatus, a communication resource of a first communication group based on the first resource, wherein the first communication group comprises the first communication apparatus, and the N pieces of communication group indication information comprise first communication group indication information indicating the first communication group; and
   performing, by the first communication apparatus, communication on the communication resource of the first communication group.

2. The method according to claim 1, wherein the first resource comprises the communication resources of the N communication groups, or the first resource is a communication resource of a second target communication group in the N communication groups.

3. The method according to claim 1 or 2, wherein there is an association relationship between the first communication group indication information and the communication resource of the first communication group.

4. The method according to any one of claims 1 to 3, wherein the determining, by the first communication apparatus, a communication resource of a first communication group based on the first resource comprises:
   determining, by the first communication apparatus, the communication resource of the first communication group based on the first resource and a ranking of the first communication group indication information in the N pieces of communication group indication information.

5. The method according to any one of claims 1 to 4, wherein the determining, by the first communication apparatus, a communication resource of a first communication group based on the first resource comprises:

determining, by the first communication apparatus, the communication resource of the first communication group in a resource other than a first non-candidate resource based on the first resource, wherein the first non-candidate resource is a resource that is not used for communication of the N communication groups.

6. The method according to any one of claims 1 to 5, wherein the communication resource of the first communication group comprises a second non-candidate resource, the second non-candidate resource is not used for communication of the first communication group, and the performing, by the first communication apparatus, communication on the communication resource of the first communication group comprises:

performing, by the first communication apparatus, communication on a resource other than the second non-candidate resource in the communication resource of the first communication group.

7. The method according to any one of claims 1 to 6, wherein the performing, by the first communication apparatus, communication on the communication resource of the first communication group comprises:

when a proportion of the second non-candidate resource in the communication resource of the first communication group is less than or equal to a resource threshold, performing, by the first communication apparatus, communication on the resource other than the second non-candidate resource in the communication resource of the first communication group, wherein the second non-candidate resource is not used for the communication of the first communication group.

8. The method according to any one of claims 1 to 7, wherein the first information further comprises M pieces of communication group indication information and second resource allocation information, M is a positive integer, M+N is less than or equal to Q, the M pieces of communication group indication information indicate M scheduled communication groups, the second resource allocation information indicates a second resource, and the second resource comprises communication resources of the M communication groups, or the second resource is a communication resource of one of the M communication groups.

9. A resource determining method, comprising:

determining, by a second communication apparatus, communication resources of N communication apparatuses; and
sending, by the second communication apparatus, first information, wherein the first information is used to schedule communication of Q communication groups, Q is an integer greater than 1, one communication group comprises a sending communication apparatus and a receiving communication apparatus, the first information comprises N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups.

10. The method according to claim 9, wherein the first resource comprises the communication resources of the N communication groups, or the first resource is a communication resource of a second target communication group in the N communication groups.

11. The method according to claim 9 or 10, wherein there is an association relationship between first communication group indication information in the N pieces of communication group indication information and a communication resource of a first communication group in the N communication groups.

12. The method according to any one of claims 9 to 11, wherein the method comprises:

determining, by the second communication apparatus, a ranking of the first communication group indication information in the N pieces of communication group indication information based on a ranking of the communication resource of the first communication group in the communication resources of the N communication groups, wherein the first communication group indication information indicates the first communication group.

13. The method according to any one of claims 9 to 12, wherein the determining, by a second communication apparatus, communication resources of N communication apparatuses comprises:

determining the communication resources of the N communication groups in a resource other than a first non-candidate resource, wherein

the first non-candidate resource is a resource that is not used for communication of the N communication groups.

14. The method according to any one of claims 9 to 13, wherein the first information further comprises M pieces of communication group indication information and second resource allocation information, M is a positive integer, M+N is less than or equal to Q, the M pieces of communication group indication information indicate M scheduled communication groups, the second resource allocation information indicates a second resource, and the second resource comprises communication resources of the M communication groups, or the second resource is a communication resource of one of the M communication groups.

15. A communication apparatus, comprising:

a transceiver unit, configured to receive first information, wherein the first information is used to schedule communication of Q communication groups, Q is an integer greater than 1, one communication group comprises a sending communication apparatus and a receiving communication apparatus, the first information comprises N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups; and

a processing unit, configured to determine a communication resource of a first communication group based on the first resource, wherein the N pieces of communication group indication information comprise first communication group indication information indicating the first communication group, wherein

the transceiver unit is further configured to perform communication on the communication resource of the first communication group.

16. The apparatus according to claim 15, wherein the first resource comprises the communication resources of the N communication groups, or the first resource is a communication resource of a second target communication group in the N communication groups.

17. The apparatus according to claim 15 or 16, wherein there is an association relationship between the first communication group indication information and the communication resource of the first communication group.

18. The apparatus according to any one of claims 15 to 17, wherein

the processing unit is specifically configured to determine the communication resource of the first communication group based on the first resource and a ranking of the first communication group indication information in the N pieces of communication group indication information.

19. The apparatus according to any one of claims 15 to 18, wherein

the processing unit is specifically configured to determine the communication resource of the first communication group in a resource other than a first non-candidate resource based on the first resource, wherein

the first non-candidate resource is a resource that is not used for communication of the N communication groups.

20. The apparatus according to any one of claims 15 to 19, wherein the communication resource of the first communication group comprises a second non-candidate resource, and the second non-candidate resource is not used for communication of the first communication group; and

the transceiver unit is specifically configured to perform communication on a resource other than the second non-candidate resource in the communication resource of the first communication group.

21. The apparatus according to any one of claims 15 to 20, wherein the transceiver unit is specifically configured to: when a proportion of the second non-candidate resource in the communication resource of the first communication group is less than or equal to a resource threshold, perform communication on the resource other than the second non-candidate resource in the communication resource of the first communication group, wherein

the second non-candidate resource is not used for the communication of the first communication group.

22. The apparatus according to any one of claims 15 to 21, wherein the first information further comprises M pieces of communication group indication information and second resource allocation information, M is a positive integer, M+N is less than or equal to Q, the M pieces of communication group indication information indicate M scheduled communication groups, the second resource allocation information indicates a second resource, and the second resource comprises communication resources of the M communication groups, or the second resource is a communication resource of one of the M communication groups.

23. A communication apparatus, comprising:

a processing unit, configured to determine communication resources of N communication apparatuses; and
a transceiver unit, configured to send first information, wherein the first information is used to schedule communication of Q communication groups, Q is an integer greater than 1, one communication group comprises a sending communication apparatus and a receiving communication apparatus, the first information comprises N pieces of communication group indication information and first resource allocation information, N is an integer greater than 1, N is less than or equal to Q, the N pieces of communication group indication information indicate N scheduled communication groups, the first resource allocation information indicates a first resource, and the first resource is used to determine communication resources of the N communication groups.

24. The apparatus according to claim 23, wherein the first resource comprises the communication resources of the N communication groups, or the first resource is a communication resource of a second target communication group in the N communication groups.

25. The apparatus according to claim 23 or 24, wherein there is an association relationship between first communication group indication information in the N pieces of communication group indication information and a communication resource of a first communication group in the N communication groups.

26. The apparatus according to any one of claims 23 to 25, wherein the processing unit is further configured to determine a ranking of the first communication group indication information in the N pieces of communication group indication information based on a ranking of the communication resource of the first communication group in the communication resources of the N communication groups, wherein
the first communication group indication information indicates the first communication group.

27. The apparatus according to any one of claims 23 to 26, wherein the processing unit is specifically configured to determine the communication resources of the N communication groups in a resource other than a first non-candidate resource, and the first non-candidate resource is a resource that is not used for communication of the N communication groups.

28. The apparatus according to any one of claims 23 to 27, wherein the first information further comprises M pieces of communication group indication information and second resource allocation information, M is a positive integer, M+N is less than or equal to Q, the M pieces of communication group indication information indicate M scheduled communication groups, the second resource allocation information indicates a second resource, and the second resource comprises communication resources of the M communication groups, or the second resource is a communication resource of one of the M communication groups.

29. A communication apparatus, comprising a processor, wherein the processor is connected to a memory, the memory is configured to store a computer program, and the processor is configured to execute the computer program stored in the memory, to enable the communication apparatus to perform the method according to any one of claims 1 to 8 or perform the method according to any one of claims 9 to 14.

30. The apparatus according to claim 29, wherein the communication apparatus further comprises a transceiver, and the transceiver is configured to: receive a signal from another communication apparatus other than the communication apparatus and transmit the signal to the processor, or send a signal from the processor to another communication apparatus other than the communication apparatus, to enable the communication apparatus to perform the method according to any one of claims 1 to 8 or perform the method according to any one of claims 9 to 14.

31. A computer-readable storage medium, wherein the computer-readable storage medium stores a computer program, and when the computer program is run, the method according to any one of claims 1 to 8 is performed, or the method according to any one of claims 9 to 14 is performed.

32. A computer program product, wherein the computer program product comprises computer-executable instructions, and when the computer-executable instructions are run, the method according to any one of claims 1 to 8 is performed, or the method according to any one of claims 9 to 14 is performed.

33. A communication system, comprising the communication apparatus according to any one of claims 15 to 22 and the communication apparatus according to any one of claims 23 to 28.

FIG. 1

FIG. 2

EP 4 514 010 A2

FIG. 3

FIG. 4

500

| Second communication apparatus | | First communication apparatus |
|---|---|---|

S501: Send first information, where the first information is used to schedule K communication groups to perform communication, the first information includes N pieces of communication group indication information and first resource allocation information, N≤K, the N pieces of communication group indication information indicate N scheduled communication groups, the first resource allocation information indicates a first resource, and the first resource is used to determine communication resources of the N communication groups

S502: Determine a communication resource of a first communication group based on the first resource, where the first communication group includes the first communication apparatus

S503: Perform communication on the communication resource of the first communication group

FIG. 5

| Communication group indication information 0 | Communication group indication information 1 | ... | Communication group indication information N−1 | First resource allocation information | ... | Information block 0 | ... | Information block N−1 |
|---|---|---|---|---|---|---|---|---|

FIG. 6

Frequency

| | |
|---|---|
| RB$_{k+K}$ | |
| RB$_{k+K-1}$ | |
| RB$_{k+K-2}$ | |
| ⋮ | |
| RB$_k$ | |
| RB$_{k-1}$ | |
| ⋮ | |
| RB$_0$ | |

First
resource

FIG. 7

Frequency

| |
|---|
| RB$_{k+4}$ |
| RB$_{k+3}$ |
| RB$_{k+2}$ |
| RB$_{k+1}$ |
| RB$_k$ |
| RB$_{k-1}$ |
| RB$_{k-2}$ |
| RB$_{k-3}$ |

First
resource

FIG. 8

First resource

| $l-1$ | $l$ | ... | $l+L-2$ | $l+L-1$ | $l+L$ | $l+L+1$ |

Time

FIG. 9

RB group 2
- $RB_8$
- $RB_7$
- $RB_6$

RB group 1
- $RB_5$
- $RB_4$
- $RB_3$

RB group 0
- $RB_2$
- $RB_1$
- $RB_0$

L time domain units

FIG. 10

FIG. 11

FIG. 12

First
resource

Communication resource
of a communication
group 2

Communication resource
of a communication
group 1

Communication resource
of a communication
group 0

$RB_8$

$RB_7$

$RB_6$

$RB_5$

$RB_4$

$RB_3$

$RB_2$

$RB_1$

$RB_0$

L time domain units

FIG. 13

First resource

Communication resource
of a communication
group 3

Communication resource
of a communication
group 2

Communication resource
of a communication
group 1

Communication resource
of a communication
group 0

| |
|---|
| $RBG_8$ |
| $RBG_7$ |
| $RBG_6$ |
| $RBG_5$ |
| $RBG_4$ |
| $RBG_3$ |
| $RBG_2$ |
| $RBG_1$ |
| $RBG_0$ |

L time domain units

FIG. 14

FIG. 15

First resource

Communication resource of
a communication group 3

Communication resource of
a communication group 4

Communication resource of
a communication group 5

K frequency domain
units

0    1    2    3    4    5

Communication resource of a
communication group 2

Communication resource of a
communication group 1

Communication resource of a
communication group 0

FIG. 16

Communication resource of
a communication group 0

Communication resource of
a communication group 1

K frequency
domain units

0    1    2    3    4    5

FIG. 17

Unavailable resource
of N communication
groups

RB 7

RB 6

RB 5

RB 4

RB 3

RB 2

RB 1

RB 0

FIG. 18

Unavailable resource of N
communication groups

RB 9

Communication
resource of a
communication group 1

RB 8

RB 7

RB 6

Communication
resource of a
communication group 1

RB 5

RB 4

RB 3

RB 2

Communication
resource of a
communication group 0

RB 1

RB 0

FIG. 19

Second communication
apparatus

Communication
group set 1

Communication
group set 2

Controller 1

Controller 2

Apparatus
11

Apparatus
12

Apparatus
13

Apparatus
21

Apparatus
22

FIG. 20

Communication
apparatus 2100

Processing unit 2110

Transceiver unit 2120

Storage unit 2130

FIG. 21

Communication apparatus 2200

| Transceiver 2210 | ⟺ | Processor 2220 |

Memory 2230

FIG. 22

Communication apparatus 2300

| Transceiver 2310 | ⟺ | Processor 2320 |

Memory 2330

FIG. 23

**EP 4 514 010 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210521171